# EUROPEAN PATENT SPECIFICATION

(11) **EP 2 842 085 B1**
(45) Date of publication and mention of the grant of the patent: **06.02.2019**
(21) Application number: 12818563.4
(22) Date of filing: 06.11.2012
(51) Int. Cl.: G06Q 10/06

(54) **DATABASE SYSTEM USING BATCH-ORIENTED COMPUTATION**
DATENBANKSYSTEM MIT BATCH-ORIENTIERTER BERECHNUNG
SYSTÈME DE BASE DE DONNÉES UTILISANT UN CALCUL ORIENTÉ LOT

(30) Priority: 26.04.2012 EP 12368012; 26.04.2012 US 201261638733 P; 14.08.2012 EP 12368020; 14.08.2012 US 201213585286
(43) Date of publication of application: 04.03.2015
(73) Proprietor: Amadeus S.A.S., 06410 Biot (FR)
(72) Inventor: DANIELLO, Rudy, F-06200 Nice (FR); JANIN, Benoit, F-06410 Biot (FR); ISNARDY, Luc, F-06800 Cagnes-sur-Mer (FR); REYNAUD, Claudine, Waltham, MA 02451 (US); AUBRY, Jean-Philippe, F-06160 Antibes (FR); CIABRINI, Damien, 06370 Mouans-Sartoux (FR); LEGRAND, Guillaume, Waltham, MA 02453 (US); GOLE, Rémy, 06130 Grasse (FR); MAILLOT, Nicolas, F-06410 Biot (FR); ROBELIN, Charles-Antoine, F-06600 Antibes (FR); VIGUIE, Luc, Boston, MA 02116 (US); GIBERGUES, Sébastien, F-06410 Biot (FR); PATOUREAUX, Marc, F-06130 Grasse (FR); ISNARDON, Bénédicte, F-06400 Cannes (FR)
(74) Representative: Samson & Partner Patentanwälte mbB
(86) International application number: PCT/IB2012/002668
(87) International publication number: WO 2013/160721

(56) References cited:
- EP-A1- 1 643 388
- WO-A1-99/22315
- US-A1- 2010 094 856
- US-B1- 6 725 333

## Description

### Field

The present invention relates to the field of database technology. More specifically, it is directed to a complex system for pre-computing database query results, storing the pre-computed database query results in a memory, managing the memory, keeping it up-to-date and making available the pre-computed data to clients.

### Background

A common problem in database technology is to ensure short response times to database queries which require processing large volumes of data. For example, such computing-power consuming processing has to be performed in response to so-called "open queries" which contain only little input information (e.g. only one or two parameters out of a dozen possible parameters are specified and/or the specified value ranges of the parameters are broad) and, consequently, lead to a large number of results in general. Possibilities to speed up data processing by increasing hardware performance are limited. Thus, attention is drawn to improving the mechanisms underlying the processing of large data volumes.

One approach to increase query processing performance is parallelism. If possible, incoming database queries are spit up into several sub-queries and are distributed to a plurality of database clients which process the sub-queries in parallel. One example of such a system is described by US 5,495,606. It discloses a database system a master processor having a splitter and a scheduler, as well as several slave query processor modules which work in parallel. The master query processor receives the query and sends back the response to the end-user. The splitter is splits a query into multiple split queries. The scheduler assigns the split queries to appropriate slave query processors which process them in parallel. The processing results of the slave query processors are re-assembled by the splitter and the master processor returns the answer to the overall query.

Similar system are described by WO 98/32064 A2 and US 5,822,747 A.

A different approach to shorten query times is to pre-compute expected queries and to maintain the corresponding query results in a memory system. Queries are then actually not processed on the large data basis at the time a database query occurs, but are directed to the memory system. Thus, processing the underlying data domain is de-coupled from actually serving the queries. Rather, the memory of pre-computed query results needs to be searched in response to an incoming query.

Such a memory system is, for example, described by US 2008/0262878 A1. It discloses a memory of travel price and availability data which is enquired by customer travel queries. The memory includes a manager which is responsible for updating the memory via a link to one or more travel product reservation systems. An update of data kept in the memory is performed by polling the reservation system(s) and occurs either in the course of processing a customer query directed to the cache, if the respective memory data is out of date compared to a benchmark date, or independent from such a customer query when a data expires or is otherwise considered "stale" or "out-of-date".

Another example of such a memory system is described by US 2005/0108069 A1. Here, a memory platform is connected to one or more suppliers of basic data. The memory is equipped with a prefetcher which puts queries to the supplier databases and updates price and availability data maintained in the memory. The prefetcher can be, for example, run at night, when network bandwidth and computing power is available. It can be invoked at regular intervals or manually.

Similar memory systems are further disclosed by US 2003/0200194 A1, WO 2008/086146 A2, US 2009/0234682 A2 and US 2008/0167906 A1.

An issue coming along with such pre-computation approaches is how to keep the pre-computed query results up-to-date in order to ensure that queries responded by the pre-computed results correctly reflect the status of the corresponding large data basis. In case the underlying data changes, the pre-computed query results get outdated and the memory system would return incorrect results. Thus, strategies are needed how the memory system can be kept up-to-date.

Various relatively simple update strategies are known in the prior art like, for example, re-computing the entire data domain frequently, establishing and maintaining re-computation schedules manually and re-computing data when they are getting too old. Such strategies are, for example, described by US 2005/0108069 A1.

Somewhat more sophisticated update strategies have been developed, as e.g. described by WO 01/33472 and WO 02/25557.

WO 01/33472 concerns an availability system used in a travel planning system. The system includes a memory having entries of availability information regarding airline seats. A manager manages entry information in the memory in order to keep information in the memory correct, current, complete or otherwise as useful as possible. In response to a query directed to the memory, the manager determines if a stored answer is stale and, if this is the case, sends an availability query to a source of availability information. Memory entries to be modified are obtained by asynchronous notifications from external systems and determined by a deterministic, predictive or statistical model.

Similarly, WO 02/25557 pertains to an information retrieval system wherein information received from information sources is pre-computed for future use, such as for future client requests. Proactive queries can be generated to populate a memory and/or to update presently pre-computed information. In an airline information system, proactive queries are ordered on the basis of statistics or predictive indications such a nearness of departure time, the age of pre-computed data, remaining seats in an aircraft, holidays or special events or equipment type. In addition, updates are received by external notifications from airlines such as AVS messages. US 2010/0094856 A1 describes a search system for querying multiple websites using key-words entered into a search box on a browser. The search box receives a list of keywords which are then forwarded to multiple websites. After a "batch process" receives a start command, information from websites (for example, Google and EBay) are retrieved. A set of query results from the websites is stored in a database and a final grid using the query results in the database is created and displayed to the user. The "batch process" relates to the fact that search queries incorporated keywords can be made to several host servers. EP 1643388 A1 relates to a database and search system for incremental indexing network documents using batch transfers. The search system includes a central server which is equipped with a crawler crawling content ("documents") from remote web server, maintains the crawled content in an "index" and makes 15 this indexed content available to clients by means of a "search engine". On the one hand, an initial crawl is populating the index for the first time. On the other hand, an incremental crawl process incrementally requests updates to the index using a change log situated at the remote web server. The transmission of the content of the remote web server is batched and shipped in bulk from the remote 20 server to the indexer. WO9922315 discloses refreshing documents in a cache based on a probability that they will be requested in the future. US6725333 discloses refreshing a cache based on a desirability of such action, desirability being determined also in respect cache entities lifetime.

### Summary of the invention

To ensure an effective handling of a high volume of data without needing an intense operator activity and an unacceptable resource usage an improved reservation system able to perform massive searches avoiding useless duplication of queries would be needed. This is achieved by a system, a method and a computer program product according to claims 1, 9 and 15.

According to the present invention, a complex database system is provided. The database system is built of several components, namely a computation platform, one or more search platform(s) and a re-computation trigger platform.

The computation platform is arranged to receive batch re-computation orders from the re-computation trigger platform. Each batch re-computation order instructs the computation platform to compute a portion of a plurality of pre-computed database query results. The computation platform is further arranged to process a batch re-computation order by computing the portion of the database query results indicated in the batch re-computation order according to a batch processing schedule within a given time frame and to return the re-computed database query results resulting from the batch re-computation order to at least the search platform. The time frame is indicated in the batch re-computation order or is determined autonomously by the computation platform or is negotiated between the computation platform and the re-computation trigger platform. The batch processing schedule is set up by the computation platform after having analysed the batch computation order and by taking into account available computation resources at the computation platform.

The at least one search platform is arranged to store the plurality of pre-computed database query results in a memory and to make the pre-computed database query results available to clients connected to the search platform.

The re-computation trigger platform is arranged to receive information of the available computation resources at the computation platform, to maintain control data comprising attributes of the plurality of pre-computed database query results in order to determine probabilities of the pre-computed database query results being outdated, and to issue batch re-computation orders to the computation platform regarding the portion of the pre-computed database query results having a higher probability of being outdated than other pre-computed database query results. The portion of the plurality of pre-computed database query results is limited by the computation resources available at the computation platform.

### Brief description of drawings

Reference will now be made, by way of example, to the accompanying drawings, in which:
Figure 1 illustrates an exemplary overview of the distributed database system;
Figure 2 is a diagram of an example of the computation platform;
Figure 3 shows the software components of a system implementing an example of the present invention and an overall view of all steps of the method according to an example of the present invention;
Figures 4-9 show schematic example of various parts of the computation method performed by the computation platform;
Figure 10 is a flow chart of the method steps of a process, in accordance with one embodiment of the present invention.
Figure 11 is a diagram of the massive search platform for a pre-shopping reservation system in accordance with one embodiment of the present invention;
Figure 12 shows a possible reservation system implementing the massive search platform of the present invention;
Figures 13-18 show the details of the single module components of the massive search platform for a pre-shopping reservation system in accordance with one embodiment of the present invention;
Figure 19 is a flow chart of the method steps of a process, in accordance with one embodiment of the present invention.
Figure 20 shows a more detailed view of an example of the database system with respect to the re-computation trigger platform;
Figure 21 illustrates the components of an example of the re-computation trigger platform;
Figure 22 depicts a flow diagram of an exemplary method to trigger a re-computation;
Figure 23 shows an example of resource availability at the computation platform for performing re-computations;
Figure 24 is a block diagram showing an operating environment for a travel option search results selection system;
Figure 25 is a high level functional diagram of an example of the travel option search results selection system;
Figure 26 is a flow chart of a featured results selection algorithm that may be executed by the travel option search results selection system;
Figure 27 is a diagrammatic representation of a web page presentation of the featured results provided by the selection algorithm of FIG. 3.
Figure 28 shows a schematic exemplary representation of a computer implementing the computation platform, the search platform and the re-computation trigger platform, respectively.

### General description

The present invention is generally directed to an information processing system, which is arranged to make a large amount of data sets available to clients such as end user computers, customers, for example, web portals, or other inquiring entities. In order to be able to handle database queries which require computations on the basis of large volumes of underlying data, database query results corresponding to expected queries are generally pre-computed and stored in a memory for allowing fast access to the pre-computed database query results. The pre-computed results are returned to the inquiring entity in response to actually occurring queries.

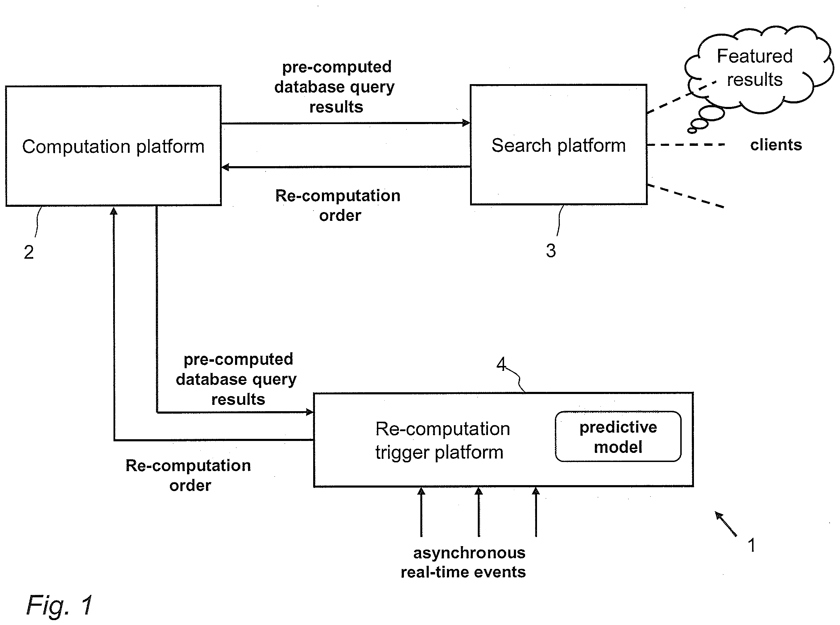

A schematic architecture of the present information processing and database system 1 is shown by Figure 1. Basic data is kept in a computation platform 2 which is connected to a search platform 3. Although Figure 1 only shows one search platform, a plurality of search platforms 3 may actually be present. The search platform 3 keeps a memory of pre-computed database query results and is connected to clients who direct database queries to the search platform 3. The search platform 3 is arranged to process these queries on the basis of the stored pre-computed data and to return respective query results to the clients. Pre-computation of the database query results is performed by the computation platform 2 in response to pre-computation requests. Such pre-computation requests are either generated by the search platform itself or by another element of the present system 1, the re-computation trigger platform 4. The latter one is also connected to the computation platform 2. Although Figure 1 shows the re-computation trigger platform 4 as a physically separate entity, it may also be integrated either in the computation platform 2 or in a search platform 3.

Subsequently, the term "query" is used as a term referring to transactional information retrieval. Such transactional queries are processed by the database system immediately, synchronously with the occurrence of the query. The corresponding results are returned to the inquiring entity as fast as possible. Transaction-oriented database systems are widely spread. For example, US 5,495,606 describes a transactional computation system, which is capable of decomposing transactional queries into sub-query elements and the processing of a query is performed on the level of the sub-query elements.

A different type of information retrieval processing is batch processing. According to this scheme, processing an inquiry is performed asynchronously, i.e. at a later time. Thus, the processing entity does also not return the corresponding results to the inquiring entity immediately, but only at the later time. In other words, the occurrence of the inquiry and its processing and the corresponding response are de-coupled. Batch-oriented processing allows, for example, generate a processing "plan" which determines when, how and by whom an inquiry is processed. In this way, it is possible to take into account available computation resources at the processing entity. A batch-oriented query is hereinafter referred to as "batch computation request" or "batch re-computation order".

Generally, the present database system 1 as depicted in Figure 1 works as follows: The computation platform 2 maintains the large basic data and pre-computes database query results in response to batch computation requests. In one example which is in detail described further below, the basic data kept by the computation platform 2 is travel-related data such as flight data including city pairs, dates, available seats, flight fares etc. Based on this travel-related data, the computation platform 2 calculates specific travel offers including a particular price. In this example, such priced travel offers constitute the pre-computed database query results which are fed by the computation platform 2 to the search platform 3 and stored there. The search platform 3 makes the stored pre-computed database query results available to the clients. The re-computation trigger platform 4 connected to the computation platform 2 is responsible to trigger re-computations of stored pre-computed database query results maintained in the search platform(s) 3 in order to keep the memory contents up-to-date as best as possible. Although a basic update mechanism is already included in the search platform(s) 3, the re-computation trigger platform 4 provides a more sophisticated memory update strategy by determining probabilities of whether the pre-computed database query results stored by the search platform(s) 3 are outdated. In order to make these determinations, the re-computation trigger platform 4 mirrors the pre-computed database query results pre-computed by the computation platform 2 (and, in addition, may also keep additional management and meta data). This is described in more detail further below.

According to the present system 1, the computation of the pre-computed database query results by the computation platform 2 is triggered by re-computation orders, which are either generated by the search platform 3 or by the re-computation trigger platform 4. The re-computation orders and the computation itself follow a batch-oriented process. This means that there-computation orders issued by the search platform 3 or the re-computation trigger platform 4 indicate a whole set or range of the pre-computed database query results kept or to be included in the search platform 3 to be pre- or re-computed. Optionally, the re-computation orders indicate a timeframe in which the computation has to be done and the computation results are awaited for processing the re-computation order. Alternatively, the computation platform 2 determines a respective time frame autonomously by itself or a time frame is negotiated by computation platform 2 and search platform 3 / re-computation trigger platform 4 outside the re-computation orders. That means, in this case, a re-computation order does not indicate a timeframe for executing the order and returning the results. After having received a batch re-computation order, the computation platform 2 processes it according to a batch processing schedule. The batch processing schedule may be set up after having analyzed there-computation order and by taking into account the available computation resources at the computation platform 2.

After having processed the batch re-computation order, the computed respective database query results are returned to both, the search platform(s) 3 and the re-computation trigger platform 4 (presuming that the optional re-computation trigger platform 4 is actually present and implemented). Thus, in case the re-computation order was initiated by the search platform 3, the results are not only returned to the search platform 3, but also to the re-computation trigger platform 4. On the other hand, in case the re-computation order was initiated by the re-computation trigger platform 4, the results are not only returned to the re-computation trigger platform 4, but also to the search platform(s) 3 holding the respective pre-computed database query results. In particular, if a plurality of search platforms 3 is present, the computation platform 2 transmits the re-computed database query results to all search platforms 3 which actually maintain the respective pre-computed database query results. If a particular search platform 3 only maintains a portion of the re-computed database query results, only the respective portion is forwarded to this search platform 3 by the computation platform 2. If a particular search platform 3 does not keep any of the re-computed database query results, none of the re-computed database query results are forwarded to this search platform. In this manner, the re-computation trigger platform 4 always maintains a consistent picture of the database query results computed by the computation platform 2 and stored in the search platform(s) 3.

The computations performed by the computation platform 2 generally serves two purposes: Basically, it initially feeds the search platform(s) 3 with pre-computed database query results, either when a new search platform 3 is set up or when the underlying data domain kept by the computation platform 2 is enlarged and additional database query results become available. Secondly and more relevant for the present system, it facilitates updating or re-computed the pre-computed database query results already maintained by the search platform(s). This is necessary because the present approach of caching pre-computed query results and responding to incoming queries only by processing pre-computed data leads to the general problem that data of the underlying data domain may change over time and, thus, the pre-computed query results get outdated. Pre-computed query results which are still up-to-date, i.e. which match the corresponding real-time computation equivalents (results which would be actually computed on demand without having cached pre-computed results available), are called "accurate" stored pre-computed results hereinafter. Thus, when the memory correctly represents the current state of the data domain underlying the pre-computed query results, the memory of pre-computed results is - in general - accurate.

Generally, in order to return correct results on the basis of the pre-computed database query results, one wants to maintain a high degree of correlation between pre-computed database query results which are provided to the querying entity in response to database queries and their real-time computation equivalents. At the same time, however, it is desirable to minimize computation resource consumption caused by re-computations, i.e. to avoid any unnecessary re-computations such as re-computation of still accurate pre-computed query results. Computing resources are limited and, generally, there are not enough computing resources to re-compute all stored pre-computed query results at all times. Thus, a trade-off between accurate representation of the database query results in the memory and utilization of the available computing power needs to be found. In order words, a sophisticated approach when and what re-computation request are to be generated and to be directed to the computation platform 2 is needed.

The simple approaches of keeping a memory of pre-computed query results up-to-date already briefly mentioned at the outsets have several drawbacks.

Re-computing the entire data domain frequently, depending on the amount of data and the available computing resource, e.g. one time per day, might ensure a reasonable balance between memory accuracy and real-time responses. However, this approach is both hardly scalable and inefficient in terms of hardware resource consumption. In particular, also those query results are re-computed which are still valid because the corresponding underlying data has not changed.

Crafting re-computation schedules to determine which query results are to be re-computed at which times manually, by a human administrator, may prove efficient for specific purposes, but it is rigid and inflexible. The schedule needs to be re-crafted again when the assumptions and conditions underlying the schedule change. It also cannot dynamically track a sudden degradation of the correctness of the stored pre-computed results which could arise in the event of massive changes in the underlying data domain. It is also hard to design such a schedule manually, e.g. due to missing objective quality criteria, and to maintain in terms of human costs.

A still further approach is to re-compute data when they are getting too old. Depending on the nature of the underlying data and the query results to be pre-computed, it may, however, be difficult to evaluate good thresholds of "oldness". In order to render re-computation more efficient, metrics should be defined to evaluate how "unnecessary" a re-computation is. For instance, it is not worth reshooting an entire massive pre-computation every day if less than half of the computed query results turn out to be outdated. On the other hand, if particular classes of query results are known to change frequently, re-computing them several times per day might be beneficial for the accuracy. Consequently, an effective way of assessing or estimating query result accuracy is needed, taking into account both the associated gain on accuracy and the cost of re-computation.

In the present system, various types of more sophisticated update strategies may be employed. A basic strategy may be implemented by the search platform 3 so that the search platform 3 itself is enabled to direct batch re-computation requests to the computation platform 2. Optionally, another update strategy may be employed by the re-computation trigger platform 4. The mechanisms implemented by the re-computation trigger platform 4 may be more sophisticated than those mechanisms foreseen in the search platform 3.

According to one example described in detail further below, the search platform 3 manages the needs to update stored pre-computed database query results by assigning an update frequency to each query result. The update frequency is determined on the basis of a stochastic model which models the volatility of the respective underlying data on the basis of statistical data from the past. On the other hand, according to an example also described in detail below, the update strategy employed by the re-computation trigger platform 4 additionally takes into account real-time events which may increase the probability that one or a whole range of pre-computed database query results maintained in the search platform 3 is/are out-of-date.

According to the update strategy implemented in the re-computation trigger platform 4, re-computations of database query results are decided based on probabilities that the pre-computed database queries are outdated, i.e. potentially differ from results obtained by another re-computation. Only those pre-computed query results which have at least a certain, given probability of inaccuracy are re-computed, whereas other cached query results which probably still accurately reflect the underlying data, i.e. they have a lower probability of being outdated, are not re-computed.

Hence, depending on the specific models and cache update strategies implemented in the search platform(s) 3 and the re-computation trigger platform 4, both entities may shoot batch re-computation orders at the computation platforms initiating re-computations of different pre-computed database query results at different times.

One example of a batch re-computation order put to the computation platform 2 is the order to re-compute about one million database query results within 24 hours at most (of course, the computation platform is generally free to deliver its results earlier than the agreed time frame). However, depending on the actual system, the amount of data (i.e. both, the amount underlying data domain in the computation platform 2 as well as the number pre-computed database query results kept by the search platform 3), the employed hardware and software, the re-computation constraints could be significantly more challenging. Hence, another example of a batch re-computation order may be the re-calculation of about 100 million pre-computed database query results within just two hours. With currently available hardware and software systems, re-computations of up to 100 billion pre-computed database query results within 24 hours are possible in practice. It can be envisaged that with increased computation resources, even higher amounts of batch re-computations are possible.

Optionally, the computation platform 2 is further arranged to analyze and decompose the batch re-computation order into smaller computation packages relating to a subset of the plurality of database query results. Such decomposition is conducted by globally analyzing the batch re-computation order and taking into account the amount and the data to be processed, the time frame in which the computation has to be performed and the available computation resources. It allows for parallel processing of the smaller pieces of the overall batch computation request. The computation platform 2 then assigns the computation packages resulting from the decomposition to processing modules in order to execute computations of the computation packages. Hence, the actual computation is performed on the level of the smaller computation packages as opposed to the overall batch re-computation order. The processing modules may be slave computation stations only loosely coupled to the computation platform 2 such as other hosts in a local area network, or be an integrated part of the computation platform itself, for example in the form of process instances running on the computation platform 2. In the latter case, it is advantageous if the computation platform 2 is equipped with a plurality of processing units such as a multi-core computer.

The processing modules then compute the computation packages assigned to them substantially in parallel and return the computation results back to the computation platform 2. The latter one re-assembles these results of the computation packages computations and composes an overall response to the batch re-computation order. Finally, the computation platform returns the re-assembled results to the search platform 3 and the re-computation trigger module 4.

In one exemplary implementation, the computation platform is formed according to a two-level hierarchy of modules, namely a master module and one or several worker modules. In this implementation example, the master module is responsible for receiving batch re-computation orders, for performing the global analysis, the decomposition and the assignment of the resulting computation packages to the worker(s). The worker(s) is/are responsible for performing the actual computation of the computation packages and for returning the computation results back to the master. The master is furthermore responsible for re-assembling the workers' results and returning the re-assembled results back to the search platform 3 and the re-computation trigger platform 4.

Optionally, the arrangement of the computation platform 2 to analyze and decompose the batch re-computation order into the smaller computation packages includes an arrangement to split up the batch re-computation order into atomic computation transactions. These atomic computation transactions may correspond to usual transactional database queries such as SQL statements. These transactional queries may then directly be assigned and forwarded to the processing units and processed in a transactional manner as opposed to a batch computation. Hence, although the batch re-computation orders instruct the computation platform 2 to re-compute respective database query results according to a batch processing model, the actual computation on the level of the subdivided computation packages is conducted transaction-oriented. Optionally, in the course of forming the atomic computation transactions by splitting up the batch re-computation order, an analysis for redundant atomic computation transactions is performed. Such identified redundant atomic computation transactions are then discarded. In this manner, unnecessary computation of multiple identical queries is avoided and computation resources are utilized more efficiently. Optionally, a grouping of atomic computation transactions to larger computation packages is performed (as opposed to forwarding the atomic computation transactions directly to the processing modules). Thus, a computation packages generally consists of a plurality of atomic computation transactions, but is generally smaller than the overall batch re-computation order. In this case, processing these re-grouped packages by the processing modules is either performed according to a batch computation (i.e. the computation platform 2 instructs the processing modules to compute the computation packages in batch processing manner by a sort of batch order on this lower level after decomposition) or in a transactional way (i.e. the computation platform 2 puts queries to the processing modules and they process the computation packages immediately and return the respective results immediately). Optionally, the computation platform is arranged to assign the computation packages to the processing modules according to the batch processing schedule, the batch processing schedule providing a load distribution by taking into account available computation resources of the computation modules within the given timeframe.

According to one implementation example, the search platform(s) 3 is/are equipped with a basic update mechanism which works as follows: The search platform 3 assigns a parameter value representing a refresh frequency to each of the pre-computed database query results which it stores. This refresh frequency score is basically and initially set on the basis of past experiences regarding the volatility of the stored pre-computed database query results. These experiences may, for example, be modelled by a predictive model and/or statistics data. The refresh frequency score triggers the update of a portion of the pre-computed database query results by directing a batch re-computation order to the computation platform 2. The portion of the pre-computed database query results, i.e. the specific pre-computed database query results to be updated is determined depending on the assigned score. That is, the pre-computed database query results are included in batch re-computation orders by the search platform 3 as often as indicated by the refresh frequency score value.

According to its main duty, the search platform 3 performs a database search in its memory in response to a query received by from a client. The database search reveals those pre-computed database query results which fulfil preferences included in the client's query. After having processed a query and found the corresponding results, the search platform 3 issues a response to inquiring client. At the same time, however, the search platform 3 may be arranged to update the score parameters assigned to those pre-computed database query results returned to the client. For example, the refresh frequency score of a particular pre-computed database query results kept by the search platform 3 may be increased each time it is returned to a client in response to a database query. In this way, the refresh frequency score is also adapted to the actual interest and demands by the clients: Pre-computed database query results which are subject to more client queries are generally updated more often than pre-computed database query results in which the clients show less interest and which are queried by and returned to the clients only rarely.

As already indicated above, the update strategy employed by the re-computation trigger platform 4 may be different from that implemented by the search platform(s) 3. Optionally, the strategy of updating the pre-computed results by the re-computation trigger platform 4 relies, as a first aspect, on means to estimate the accuracy of the entire memory of pre-computed database query results on the basis of a predictive model. As a second aspect, it is also checked whether those estimations are generally in line with reality, verifying that the model-based re-computation strategy is still valid on the occurrence of actual real-time (and real-life) events which may serve as indications that, for example, a significant part of the data underlying the stored pre-computed query results has been changed and - due to these changes - also the corresponding stored pre-computed query results are out-of-date.

Optionally, the predictive model, on which the estimations of the pre-computed results' accuracy generally relies, models the discrepancies between the pre-computed query results and presumed actual database query results, i.e. it approximates the accuracy or inaccuracy of any cached query result. The model models, for example, the probable volatility of the pre-computed results over time. Presumptions on the pre-computed results' volatility are concluded and extrapolated from past real-world experiences on the subject-matter of the respective data domain.

According to a particular implementation example elaborated further below, the underlying data may be located in the domain of air travel and contain information on flights such as departure and destination airport, airline, departure and return dates, fares, booking classes and the like. This air-travel related data is kept in the computation platform 2. Computing prices on the basis of the basic flight data is resource- and time-consuming. Hence, the actual prices are pre-computed and stored in the search platform(s) 3. Travel queries by customers in order to get knowledge of availability and prices of air flights are then not directed to computation platform 2, but to the search platform(s) 3. As described above, the re-computation trigger platform 4 is responsible for updating the memory(ies) of the search platform(s) 3 (in addition to the basic update mechanisms of the search platform(s) 3 themselves).

In this example, the probabilistic model utilized by the re-computation trigger platform 4 models the volatility of the flight prices over time. The required knowledge to build such a model can be taken from real-world experiences on the behavior and development of flight prices prior to the departure date. For example, it might be known that flight prices remain relatively stable over the time period prior to one month before the respective departure dates, but get more volatile during the month before the departure date. Hence, the probabilistic model indicates that pre-computed stored prices belonging to flights upcoming in the next month should be re-computed more often than such pre-computed prices which are associated with flights in the more distant future.
In addition to modelling the accuracy of the pre-computed query results using the probabilistic model, a severe drop of accuracy is prevented by being reactive to real-time events. Re-computation decisions are refined on receipt of pre-determined real-time events which might have an impact on the correctness of the pre-computed query results. The real-time events are asynchronous, i.e. the point of time of their occurrence is not given - they can occur anytime. In order to be able to receive and process incoming real-time events, the re-computation trigger platform 4 is equipped with external interfaces to communication sources which notify the re-computation trigger platform 4 accordingly with the relevant information.

Such real-time events may pertain to particular situations which are not considered in the re-computation trigger platform's 4 predictive model. For example, a portion of the pre-computed prices may be affected by a promotion, whereas other prices may go more volatile at a particular time of the year (such as holiday seasons, Christmas etc.). Also "exceptional" situations like a trade fair, a sport event or the like, random events such as strikes or natural disasters could change the presumptions underlying the "normal" model causalities. These particular influences can be considered when determining the probabilities that pre-computed stored query results are outdated in response to respective real-time events representing such exceptional situations. Alternatively, the impact of scheduled events such as trade fair, holiday seasons, sports events and the like can be introduced into the probabilistic model in good time before the date of the event.

It is important to note that, optionally, the update strategy of the re-computation trigger platform 4 is capable of taking into account "uncertain" events, i.e. such events which do not invalidate one or more pre-computed query results with certainty, but only indicate that the probability might be increased that pre-computed database query results are outdated. In other words, these events are indeterministic with regard to the accuracy of pre-computed database query results and only have a probabilistic influence on the discrepancies between pre-computed database query results maintained in the search platform(s) 3 and presumed actual database query results resulting from a hypothetical re-computation by the computation platform 2. This is different from the proposals described in WO 01/33472 and WO 02/25557 wherein the AVS messages, for example, indicate that a particular flight has been cancelled. Consequently, on receipt of such an AVS message, it is known with certainty that the respective airplane seats are not available anymore.

For example, referring to the scenario of travel-related data storage as mentioned above, a real-time event having only a potential impact on the accuracy of the pre-computed query results could be a fare update. A fare is a set of data including parameters like departure and destination city, booking class, flight type (one-way or round-trip), an amount of money and rules which define constraints that must be met for the fare to actually apply. Thus, fares represent the basic data for price calculation of a particular flight and are kept by the computation platform 2. If fares for a specific origin-destination-city-pair are updated by the airline, the likelihood may be increased that a pre-calculated flight price stored in one or more search platform(s) 3 regarding this city pair is not correct anymore. However, from the perspective of the re-computation trigger platform 4, this is not certain because the fare which was actually applied by the pre-computation platform 2 when pre-computing the stored price is unknown to the re-computation trigger platform 4. For example, the fare applied for the previous pre-computation by the computation platform might have actually not been changed and the fare changes indicated by the fare change event do not change the fact that the previously pertinent fare still applies and, therefore, the price calculated before remains valid. Or, the previously applied fare is actually changed, but - due to the change - another fare now applies for calculation of the flight price in question which, in the end, has the effect that the pre-computed price actually remains valid.

Thus, on the observation of such real-time events, the re-computation trigger platform 4 can only guess with an indeterministic likelihood that certain pre-computed database query results are now outdated and it would be advantageous to re-compute them in order to keep the memory of the search platform 3 accurate. However, this is not a certain fact and it may well be that the respective pre-computed query results - although their probability of being outdated has increased - are actually still accurate and, consequently, do not have to be re-computed.

Optionally, the determination of probabilities that pre-computed database query results are outdated is performed by the re-computation trigger platform 4 in two logical steps: Generally, at the first logical level, the probabilities are identified by using the probabilistic predictive model. Subsequently, at the second logical level, these determined probabilities may be amended in response to incoming real-time events.

Based on the probabilities determined in this manner, the re-computation trigger platform 4 automatically generates and issues batch re-computation orders to the computation platform 2 via an appropriate network interface between the two entities (cf. Fig. 1 above). Generally, batch re-computation orders are generated with respect to those pre-computed database query results which have a higher probability of being outdated than other pre-computed database query results which have a lower probability of being outdated.

This general rule of thumb is optionally implemented in the re-computation trigger platform 4 by using threshold values of the probabilities: Pre-computed query results stored in the search platform 3 with a determined probability of being outdated above such a threshold value, need to be re-computed. Accordingly, a respective batch re-computation order is sent out to the computation platform 2. Pre-computed query results with a determined probability of being outdated at or below such a threshold value, are considered as likely being still accurate and consequently do not need to be re-computed. Accordingly, they are not included in the next batch re-computation order to be issued to the computation platform 2.

Optionally, the available computation capacities at the computation platform at particular times are already taken into account by the re-computation trigger platform 4 before sending out a batch re-computation order. In order to be capable to consider available resources, the re-computation trigger platform 4 has knowledge about the degree and/or schedule of the computation platform's 2 capacity utilization and free computation resources, respectively. The relevant information are populated via the communication link between the two platforms.

Optionally, the re-computation trigger platform 4 is arranged to consider the relation between the probabilistic model and occurring real-time events before deciding whether or not a re-computation decision is amended or overridden in response to a particular real-time event. Basically, real-time events are analyzed whether and to which extent they are already present in the probabilistic model. For such events which are sufficiently represented in the model, no amendments are necessary as their occurrence has already taken into account when determining the probabilities of the respective pre-computed database query results on the basis of the probabilistic model. If, on the other hand, a real-time event is not at all predicted by the probabilistic model, i.e. it is not present in the model, it is immediately taken into account and the probabilities and re-computation orders regarding the respective pre-computed database query results are amended as soon as possible.

Optionally, the re-computation trigger platform 4 is arranged to accumulate occurring real-time events which are present in the probabilistic model to some extent in order to assess trends. If an accumulation of actually emerging real-time events generally modelled by the probabilistic model indicates a burst the extent of which is beyond what is considered by the model probabilities are amended and, if applicable, re-computation orders are overridden accordingly.

Optionally, the re-computation trigger platform is further arranged also accumulate and analyze events in groups in order to filter out events which might outdate too few pre-computed database query results stored by the search platform(s) 3 might be considered irrelevant. Also for this reason, events are logged, collected over time and handled in an aggregated manner. In this way, generating batch re-computation orders too extensively in response to low-impact events is prevented and, thus, a disproportional increase of computation resource costs at the computation platform 2 is avoided.

In summary, taking into account real-time events potentially influencing the accuracy of pre-computed database query results at least above a given extent by the re-computation trigger platform 4 provides an improved reactivity to degradation of the correctness of pre-computed database query results at the search platform's 3 end.

According to a particular implementation example already briefly mentioned above and explained in particular detail further below, the present database system 1 is a travel information management and reservation system. The respective components of the present database system, i.e. computation platform 2, search platform 3 and re-computation platform 4, are in more detail explained below on with reference to such an implementation example. In this example, the computation platform 2 maintain travel information such as flight-related data, i.e. origin and destination airport, flight dates, seat classes and availability data, flight fares and the like. On these basic data, the computation platform 2 pre-computes priced travel options. The search platform 3 may be a pre-shopping platform. Before actually booking a travel, end users of the travel industry normally want to inform themselves about available flights including current flight prices, without any commitment to actually book the flight. Very often, such non-binding requests for pre-booking information take the form of open and broad database queries which would require an enormous amount of computing resources when computed only at the time of query. Moreover, customers expect the requested information to be delivered virtually instantaneously in response to their queries. Thus, pre-shopping query results such as priced air travel recommendations are suitably pre-computed and stored in a fast access memory.

The pre-computed database query results, i.e. the priced travel recommendations generated by the computation platform 2, are not only forwarded to the pre-shopping search platform 3, but duplicated and also stored in the re-computation trigger platform 4 for update analysis. Re-computation decisions may be made by the pre-shopping search platform 3, but in particular by the re-computation trigger platform 4 on the basis of a probabilistic model which itself may be composed on the basis of statistics data taken from other Amadeus services. In addition, real-time events such as flight fares changes, airplane seat availability changes, booking class invalidations, client flight ticket requests, user quality feedback events, flight cancellations and/or the like are taken into account.

According another aspect, the present system is equipped with an arrangement to process and display database search results in a particular way. More specifically, database search results are first categorized according to given categories and then, as a second step, ranked within the categories. In this way, database query results can be presented at a client in a structured and user-valuable way. This is indicated by the cloud called "Featured results" in Figure 1. The respective mechanisms to provide "featured results" to the clients may be implemented in the search platform 3 and, optionally and additionally, in the computation platform 2.

More detailed explanations are given below in the sub-chapter "The search results processing and display sub-system".

### Detailed description

### The Computation Platform

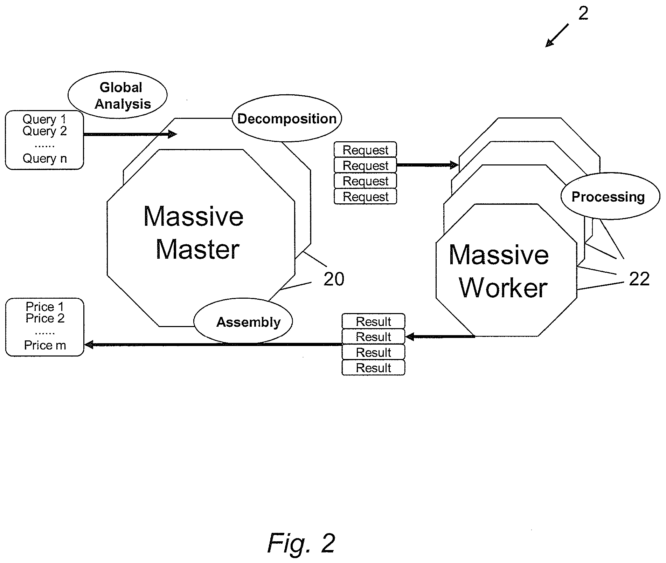

Figure 2 shows an implementation example of computation platform 2 dedicated to the computation of flights and prices at a massive scale according to an example of the present computation platform. The data processing is separated from the shopping traffic dedicated to booking.

This computation platform 2 manages queries with a high degree of freedom instead of transactions used for booking applications. The degree of freedom applies e.g. on the date combination (all outbound date of the year, all inbound date until several weeks after outbound date), geographic zones for the origin and the destination, the requested operating carrier (one, several or all possible carriers for requested city pair), all available booking codes, all possible passenger types.

Since low-latency is not mandatory for such data computation, timeframe can be different from real time. Processing and resource consumption can be thus spread over a longer time frame such as two hours, four hours, eight hours, twelve hours, 24 hours or even longer time frames. Returning of the results is spread over the timeframe accordingly.

The present computation platform 2 is organized according to a batch model which resources can be dynamically instantiated to cope with high volumes of data. It performs data processing optimization based on a global analysis. Also, it is generic and extensible. Different business logics - depending on the nature of the underlying data upon which computations are executed - can be easily plugged to the computation platform 2 to fulfill different customer requirements (such as pre-shopping, revenue management, fares analysis in the travel domain or completely different logics in other domains).

In an example, the present computation platform 2 includes one or more massive masters 20 and a plurality of massive workers 22. The massive masters 20 globally analyze an incoming batch re-computation order which is then decomposed into optimized requests. Requests are then processed by one or more of the massive workers 22 and the results are fed back to the originating massive master 20, which assembles the results into journey solution plus prices.

In an example, the present computation platform 2 decomposes the batch re-computation orders into atomic queries and performs a global analysis which aims at identifying relevant redundancies between the atomic queries to avoid useless re-processing. Merging of the redundant queries parts has to be efficient in terms of resource consumption and in terms of data access during the processing. The computation platform 2 has to fulfill at the same time functional and technical requirements: it must respect a Service Level Agreement established with the search platform 3 (time constraints, quality) on one hand, and respect operational requirements (resource control, impacts on other components) on another hand. The computation platform 2 of the example depicted by Figure 2 includes two kinds of servers/entities:
Massive masters 20 which host the global intelligence required to optimally manage the inputs and the outputs.
Massive workers 22 which implement the business logic of each product plugged on the computation platform 2.

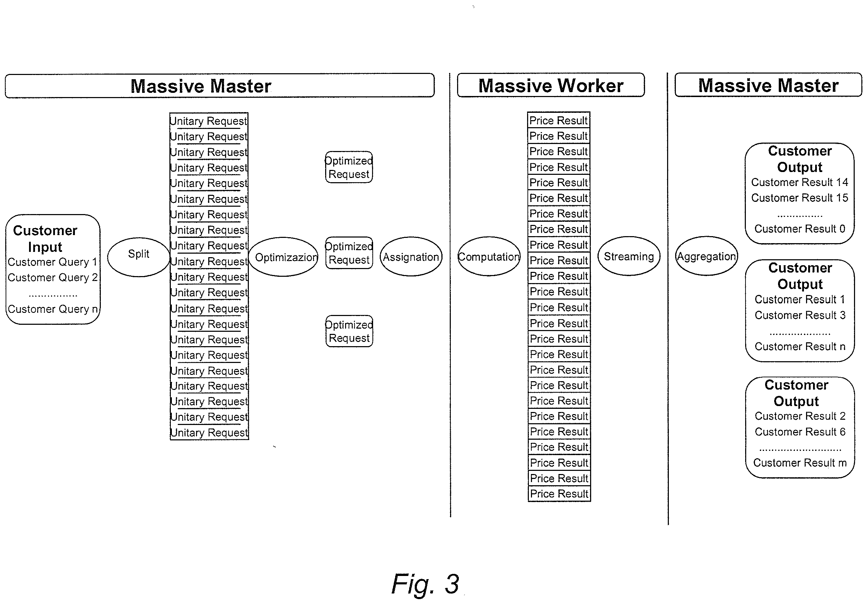

Figure 3 shows the flow of the process according to an example of the present computation platform 2. The global flow can be divided into the following six steps/operations which can be performed in parallel:
- SPLIT, where the massive master 20 extracts all unitary requests from customer queries;
- OPTIMIZATION, where the massive master 20 globally analyses for a smart request merging;
- ASSIGNATION, where the massive master 20 smartly routes the requests to the massive workers.
- COMPUTATION, where the massive worker 22 processes the optimized requests.
- STREAMING, where the massive worker 22 manages results volumes.
- AGGREGATION, where the massive master 20 groups results according to customer queries.

Each step is described in detail in following paragraphs.

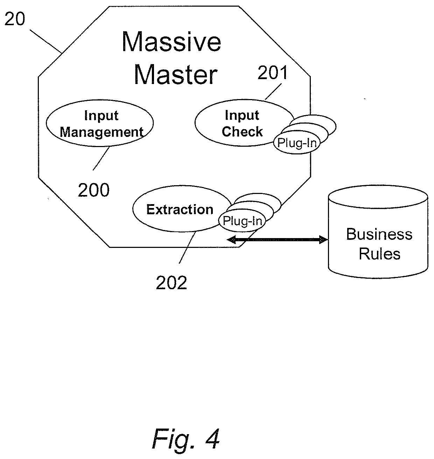

Figure 4 shows a schematic representation of the SPLIT operation, i.e. the extraction of unitary requests from the query received by the customer. The split operation consists in transforming the queries into unitary requests. A unitary request is the logical equivalent of a transaction without degree of freedom: every date, geographic, passenger, carrier information is set.
The input management module 200 detects a set of queries posted by a customer. If at a given time no query has been received, it can also decide to process a set of queries previously processed. With this feature, the customer is not compelled to post a set of query within a given interval (e.g. everyday). The input management step also decides the frequency of processing of each query: e.g. once or several times a day. The input management module 200 also determines the tasks instantiation to process input volumes. Required resources for following steps are evaluated according to the queries number and to the processing timeframe established with the customer. This guarantees to compute a massive scale of data in a constrained delay.

The input check module 201 checks the inputs both syntactically and semantically. Since this step depends on the product, different plug-ins are added to manage different input types. For a new product or a new product version, a new plug-in is added.

The extraction module 202 creates unitary request from semantic information given by the customer in the queries. The extraction depends both on the product and on the input given by the customer. Therefore this step is pluggable. Moreover, business rules can be applied for some customer functional constraints.

An example of business rules applied in this context could be: request better availability quality (e.g. poll availability to airline) for domestic markets.

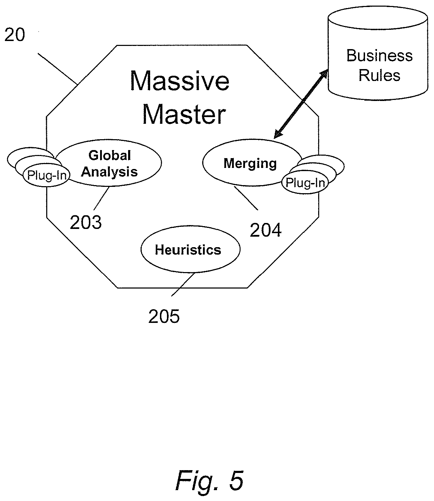

Figure 5 shows a schematic representation of the OPTIMIZATION operation, i.e. the global analysis of the customer's requests. Once unitary requests are generated, another phase takes care of merging redundant parts for computation optimization purpose. This operation consists in several steps detailed bellow. The global analysis module 203 identifies redundancies in unitary requests. For an efficient optimization, this step is based on plug-ins defining for each product the most relevant redundancies to be grouped.

The merging module 204 groups unitary requests to avoid redundancies processing. Several smart merging are possible. The choice of grouping is thus based both on plug-in defining optimal rules specific to a product, and on business rules to suit customer functional constraints.

Business rule example: request grouping is based on timeframe processing wished by the customer. Domestic markets requests have to be processed after office closure hour and thus after last possible manual update, whereas other markets requests can be immediately processed.

For queries which are regularly processed, an important part of generated results will be the same at each process. The heuristic module 205 statistically identifies requests which should generate same results than those returned to the customer at the previous process. These requests will not be processed.

Unnecessary price computations are thus reduced. This module economizes on resources consumption. Nevertheless, a good level of accuracy for the global result is guaranteed.

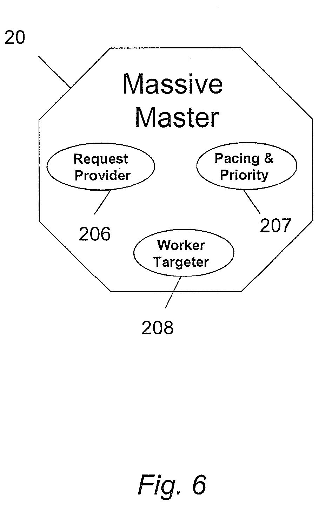

Figure 6 shows a schematic representation of the ASSIGNATION operation, i.e. driving request processing. Once the first merged request is generated, it is processed. The assignation step, running in parallel of the previously described step, drives the attribution of the requests to the massive workers 22 according to resources. This operation consists in several steps realized by different modules as explained below. The request provider module 206 selects requests to send to the massive workers 22 according to the queries from which they have been generated. The purpose of this module is to permit the system progressively returning to the customer the results of its queries. The requests are selected to compute the global result of a query. Once results of this query are computed, requests relative to another query are selected. Another selection criterion is the authorized processing timeframe of each merged request. For example, some request processing are delayed after the airline office closure hours. Therefore, the last manual updates on the data used for the results computation are taken into consideration.

The pacing and priority module 207 regulates the massive workers' 22 activity according to available resources by avoiding overloading them. It also manages the priority between the requests to be processed. For example, a queries set has been requested in Fast Track mode and has thus to be processed with a higher priority than a standard set of queries. More resources are dedicated for the computation of these queries.

The massive worker targeter module 208 chooses the massive workers farm where a request has to be processed. This choice is based both on a technical concern (the resource availability of the massive workers 22) and on a functional concern (massive workers farms are dedicated for some markets, products or customers).

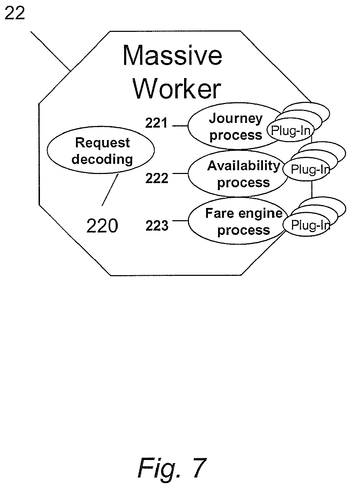

Figure 7 shows a schematic representation of the FARE COMPUTATION operation, i.e. business logic. The massive worker 22 implements the business logic of all products provided by the method according to an example of the present computation platform. The request decoding module 220 decodes the optimized requests provided by the massive masters 20. The process is then driven by calling different modules already existing in the GDS. The called modules and the calling sequence depend on the product. Each called module is based on applicative plug-ins specific to each product. The journey process module 221 implements the computation of flight solutions of the request. It is in charge of identifying journey combinations from date, geographic and option information given in the request. Journey processing is relying on up-to-date data. The availability process module 222 implements the checking of journey solution availability. For a better quality level, request can be directly performed to airline companies to rely on more up-to-date data. The fare engine process module 223 implements price computation of possible solutions to the request, according to information and options given in the request. If only better solutions are requested, it also compares prices to keep only the best.

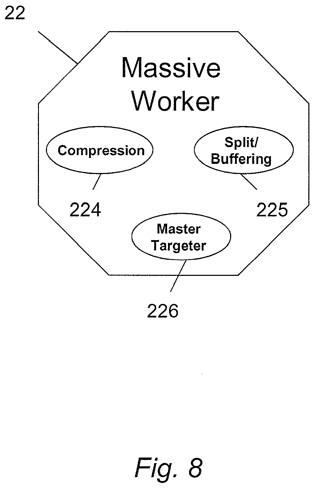

Figure 8 shows a schematic representation of the STREAMING operation, i.e. managing raw results. To manage the huge volumes generated by the batch re-computation order and the associated computation, operations are required to optimize both communication with the massive masters 20 and storage of results. Several modules on the massive worker 22 detailed below permit this optimization. The compression module 224 decreases the size of the results, and thus the communication volume between the massive workers 22 and the massive masters 20. The volume of the stored data is decreased too. Since this operation consumes processing resources, it is applied only if the gain of communication and storage resources consumption is relevant. The split / buffering module 225 also permits resource consumption optimization.
If the results volume of generated results is too high, it is split into several bundles. The communication with the massive masters 20 and the data storage are thus concurrently performed. If the results volume is too low, it is buffered until being relevant to be managed by a massive master 20. The communication is more efficient since only few storing modules, which process relevant volumes, are required. The massive master targeter 226 chooses the massive master 20. This choice is based both on a technical concern (the resource availability of the massive masters 20) and on a functional concern (massive master farms are dedicated for some markets, products or customers).

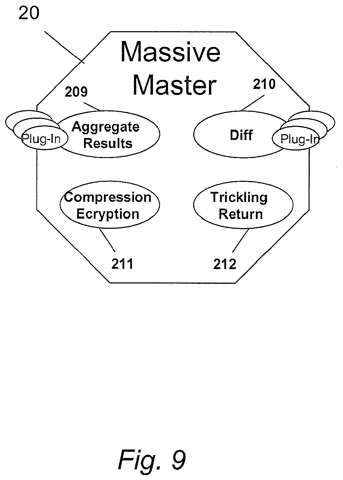

Figure 9 shows a schematic representation of the AGGREGATION operation, i.e. managing customer output. As soon as all the results of a query have been generated, they have to be aggregated and returned to the customer under an appropriate format. The aggregate results module 209 transforms raw results from the massive workers 22 into price oriented results. The results are aggregated according to customer queries: the customer receives answers to its questions and not disorderly results. For example, if the customer requested in a query the solutions of a specific market with several options and for all outbound dates of the year, all solutions corresponding to all options and all outbound dates of the query will be aggregated in the reply. A plug-in defines for each product and each customer an expected result format. The diff module 210 is a prices packaging option selecting results which have changed from the previous processing. Only new, updated of deprecated results are returned to the customer. Plug-in defines the criteria of differentiation according to the product. This option permits an efficient network transfer between the GDS and the customer. Moreover, the activity on the customer system is decreased since less volume has to be managed. The compression and encryption module 211 permits an efficient and secure network transfer by decreasing returned volume and ensuring results confidentiality. The trickling return module 212 regularly transfers by grouping the global result of processed queries. Return is thus spread over a long time scale. Since the volumes of results are massive (for example, more than one million re-computed priced travel recommendations), the search platform does not want to wait for the end of the processing before integrating the results. Therefore, few minutes after the start of the processing, first results are generated and returned. The transfer is spread over the processing timeframe. Results can thus be progressively integrated into the customer pre-shopping or revenue management system.

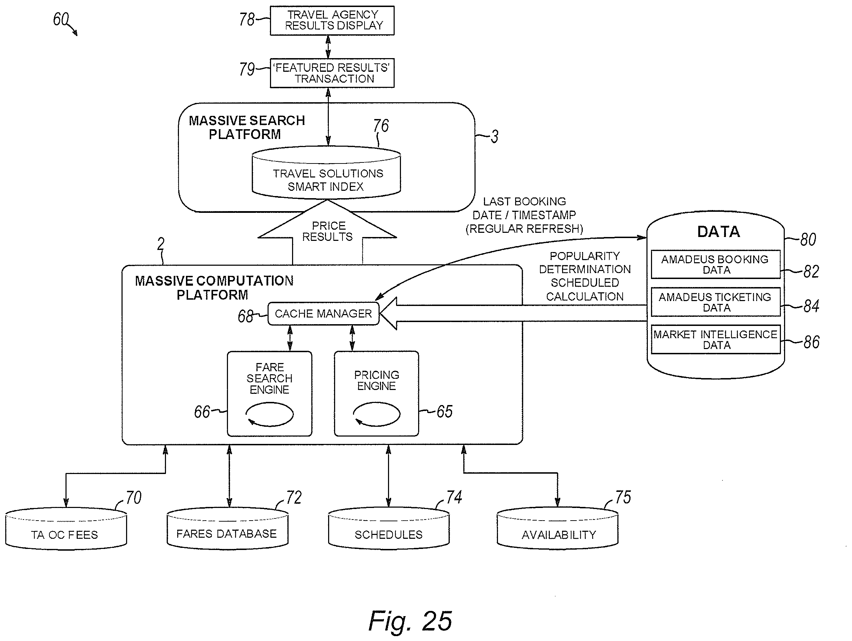

Optionally, the computation platform 2 comprises a cache (not shown in Figure 2) in which the database query results / priced travel recommendations re-computed by the computation platform 2 are buffered. Batch re-computation orders arriving from the search platform(s) 3 and/or the re-computation trigger platform 4 may be served directly from this cache of the computation platform 2. The computation platform's 2 cache may comprise a cache manager, as will be described further below in relation to Figure 25.

### More specific examples of use of the computation platform:

### Example one: Product for a Pre-Shopping system.

Let's consider a product dedicated to a Pre-Shopping system feeding. It computes, for each flight solution matching the specified city pairs and carrier, the lowest applicable price for all combinations of outbound dates and stay durations. The computation relies on all data automatically filed to the GDS through the intermediary of tariff publisher. Recommendations are returned only if seats in flight are available. Since checking the seat availability consumes a lot of resources, this operation is performed only for the queries having the partners of the customer as carrier. By creating the unitary requests, the split module, thanks to business rules, is able to identify the partners in requests and flags those requests to enable "seat availability checking". The optimization module merges journey requests preventing redundancies due to date combinations. The merge operation uses a plug-in taking into consideration optimizations for Fare Engine processing specific to this product.

### Example two: Product for a Revenue Management system

Let's consider a product dedicated to a Revenue Management feeding. It computes, for each flight solution matching the specified market, the lowest applicable price for all combinations of outbound dates, stay durations, advance purchase condition and Reservation Booking Code (henceforth RBD). The same RBD has to be used on whole travel. The computation relies on all data automatically filed to the GDS through the intermediary of tariff publisher. The computation of the requests with outbound date in the next 45 days have to rely on all data manually filed to the GDS by the customer during the opened office hours of the day. The optimization module bundles date combinations and advance purchase to optimize the computation of journey solutions. At merging time, it applies business rule to separate requests with outbound date in the next 45 days. Their processing is delayed after customer's office closure to take into consideration manual updates filed to the GDS. The fare computation module uses dedicated Journey process plug-in returning RBD for flight solutions. It does not use availability process plug-in since product is not dedicated to shopping or pre-shopping business. Since this product generates several thousands results per optimized requests (due to combination of dates, advance purchase and RBD), the streaming module performs a splitting of the raw results on Massive Workers.

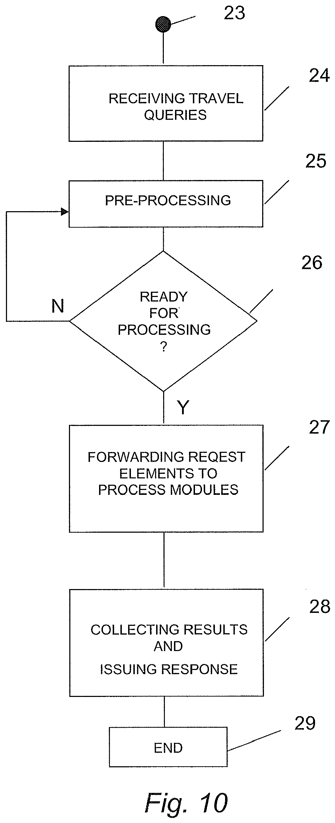

The method described above implementing an example of the present computation platform 2 is also represented in the diagram shown in Figure 10. The method begins at black circle 23 and then goes to box 24 where a batch re-computation request is received by the computation platform 2. Such a re-computation request includes, in the present example, a collection of travel queries sent either by a search platform 3 or the re-computation trigger platform 4. In an example of the present database system, the computation platform 2 receiving the batch computation request and performing the computations for satisfying search platform's 3 needs is separate from the actual search platform 3 itself, but those skilled in the art will appreciate that the two platforms (computation platform 2 and search platform 3) could be integrated together. Moreover, the present database system 1 includes an arrangement in which more than one search platform 3 is connected to the computation platform 2. In one example, two search platforms 3 are present, a pre-shopping platform providing users with pre-reservation information about available flights and travels, and a reservation platform responsible for performing actual reservations subsequent to pre-shopping. Once the batch re-computation request is received, the control goes to box 25 where the pre-processing of the batch re-computation request is performed. The moment when the pre-processing is invoked or the event triggering the start of pre-processing can depend on several factors and it could be even customized by the system administrator or by the single users: for example a pre-processing could be done every pre-determined period of time (e.g. at the end of day or every hour); it could be automatically performed when a critical mass of queries is received or when the maximum capacity is reached; or again it could be requested by the administrator or by users. According to an example of the present invention the pre-processing of a batch re-computation request includes a global analysis of the batch re-computation request including a plurality of travel queries which is decomposed into simple request elements (also called "unitary requests" in Figure 3) in order to optimize the database enquiry activity. In an example of the present computation platform each query is analysed by a massive master 20 (pre-process module) which extracts one or more simple request elements. These simple request elements are then rearranged in order to avoid duplications and are organised (divided) into subsets (also called "optimized request" in Figure 3) according to given criteria which take into consideration several factors and also business rules as explained above with reference to Figure 5. This pre-processing continues until all travel queries have been pre-processed (box 26). Once the requests have been optimized, the massive master 20 assigns each subset to the suitable massive worker(s) 22 and forwards the requests subset to the chosen suitable massive worker(s) (box 27). Each massive worker 22 will then perform the enquiries in the database to satisfy users' request, e.g. trip fares, trip availability just to make some examples. The results of the enquiries are then collected and transmitted back to the massive master 20 to be provided to the search platform 3 which submitted the travel queries and the re-computation trigger platform 4 by issuing a response (box 28). In an example of the present computation platform, the results are aggregated by the massive master 20, as explained above, before being provided back to the other platforms. The process then ends at step 29. In the example described above with reference to Figure 10, the computation platform 2 performing the method includes one massive master 20 and a plurality of massive workers 22, however other implementations are possible, e.g. more than one massive master 20 working in parallel or even one single massive worker 22 processing the plurality of subsets. Also the massive workers 22 and massive masters 20 do not necessarily correspond to different physical machine, but they could simply be applications working on the same computer system.

In summary, the computation platform 2 presented herein can be characterized by the following points:
1. A method in a reservation system for generating priced travel solutions according to non-binding travel queries, the reservation system having access to a plurality of travel databases containing information on travel availability and fares according to a plurality of parameters, each travel query including a set of preferences each preference being related to a parameter selected among the plurality of parameters, the method including:
   - receiving a plurality of travel queries, each travel query being associated to a user;
   - pre-processing the plurality of travel queries, the pre-processing including:
      - extracting from each query at least one simple request element;
      - sorting the plurality of request elements according to at least one parameter;
      - in case of more than one request element containing the same preference for the same at least one parameter, deleting duplicated request elements;
      - dividing the plurality of request elements into subsets according to given criteria;
   - forwarding each subset of request elements to a process module which executes the request element interrogating the plurality of databases;
   - collecting the results from the process modules and issuing a response to users for each travel query.
2. The method of point 1 wherein the results collected from process modules are aggregated before the response is issued to users.
3. The method of any preceding point wherein the step of executing the request element of each subset of request elements is performed in parallel by a plurality of process modules.
4. The method of point 3 wherein the step of dividing the plurality of request elements includes assigning each subset to one of the plurality of process modules according to the given criteria.
5. The method of any preceding point wherein the step of pre-processing the plurality of travel queries is performed in parallel by a plurality of pre-process modules.
6. The method of point 5 further comprising:
   - for the result of each request element, the process modules selecting one of the plurality of pre-process modules to which forward the result for aggregation and issuing the response to the user.
7. The method of any preceding point wherein the plurality of parameters include date and geographic location.
8. A computer program comprising instructions for carrying out the steps of the method according to any preceding point, when said computer program is executed on a computer.
9. A computer program product including computer readable means embodying the computer program of point 8.
10. A software tool dedicated to feed a pre-shopping system including the method of any point 1 to 7.
11. A software tool dedicated to feed a revenue management system including the method of any point 1 to 7.
12. A software tool dedicated to feed a fare analysis system including the method of any point 1 to 7.
13. A data processing system for managing pre-shopping travel queries, the data-processing system having access to a plurality of travel databases containing information on travel availability and fares according to a plurality of parameters, each travel query including a set of preferences each preference being related to a parameter selected among the plurality of parameters, wherein the system comprises one or more components adapted to perform the method of any points 1 to 7.
14.A service deployed in a data processing system for implementing the method of any points 1 to 7.

### The search platform

In one implementation example, the present search platform 3 aims at storing pre-computed air travel prices and provides several advantages. However, any other kinds of application and data which is to be made available to users are possible. It is noted that the technical features of the search platform described herein are not driven or limited by the kind of data and its content as maintained by the search platform.

According to the example described subsequently, the search platform 3 is designed to hold entire catalogs of air travel. It is able to store best prices of e.g. thousands of markets for all the days of the year to come, several possible prices per day depending of the travel's stay duration. The search platform 3 can be of distributed nature which lets it scale to whatever number of markets to store. This optimizes storage of air travel data, with the following benefits:
- Travel search efficiency: the achievable response time of search transactions is *few tens of milliseconds,* whatever their complexity are (open destination, full year search...).
- Travel data update efficiency: update has a limited impact on the overall storage, which enables continuous updates, with instantaneous availability of new data.
- Travel data storage efficiency: data can be factorized if common in many catalog to further reduce storage cost
It can maintain a high quality of pre-shopping travel recommendations at a sustainable cost. The search platform 3 has various engines to detect the travels prices that require re-computations. This can drive partial re-computation to save hardware resource. The saved resource can be re-invested in other re-computations to achieve higher accuracy of pre-computed database query results from a user's standpoint (in the range of 80-90%).

The search platform 3 according to the present example provides different types of search products, depending on the needs of its customers and travel providers. For the sake of the example, a carrier would need a search product to retrieve recommendations for his airline and that of its partners. On the contrary, an online travel agency would need a search product to retrieve any type of air travel without carrier filtering. Those two products may have internal specificities and may be optimized accordingly.

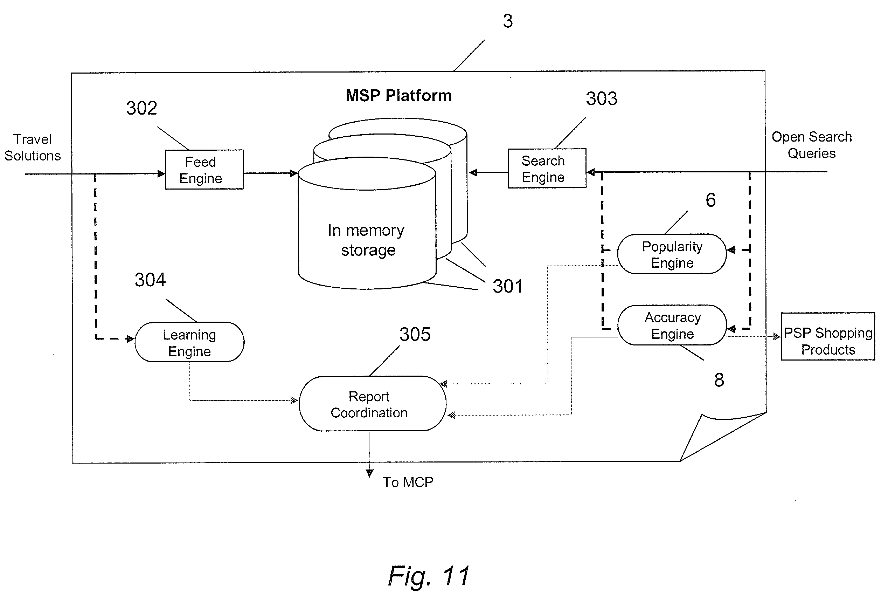

Figure 11 shows a search platform 3 for storing and searching air travel recommendations according to an example of the present search platform.
The stored catalogues or air travel recommendations are spread over all the machines which compose the distributed system. On every machine, the subpart of the global data is stored in a fast access memory location (e.g. RAM) for fast data access. Figure 11 presents a logical view of an exemplary architecture of the present search platform 3. Although it may or may not be physically distributed, the logical view of the system can be split in two main groups:
The databases 301 and square boxes 302 and 303 represent the typical parts of the search platform 3.
Databases 301 represent all the air travel recommendations logically grouped into pools of recommendations and physically stored across different machines The square boxes 302 and 302 represent the Feed and Search engines:
- The Feed engine 302 indexes groups of pre-computed air travel recommendations (*e*.*g*. all travels with same city pair) and stores them in one of the machines in the distributed system.
- The Search Engine 303 locates groups of data among the physical machines and provides index search facilities to answer to queries originating from users.

The oval items 6, 8, 304 and 305 represent a series of analysis engines. Their purpose is to optimize the hardware cost of the database system: They aim at achieving a good compromise between the number of database query results to re-compute every day *vs.* the correctness (up-to-dateness) of the pre-computed prices stored in the search platform 3. These engines analyze feed and search operations and generate metrics on volatility and quality of data stored in the search platform 3. Some of those engines make use of other services which may be accessible such as services available in a Global Distributation System (not part of the invention). The engines are in particular:
- a Learning Engine 304, analyzes the travel recommendations which are stored in the platform every day to extract some information about the volatility of some prices across dates and markets, i.e. how long a price stays the same;
- a Popularity Engine 6 tracks the most requested or most returned travel recommendations, (per date, market...) to gain metrics concerning the most relevant data stored in the system.
- an Accuracy Engine 8 tries to detect discrepancies between travel recommendations stored in the system and real shopping prices, i.e. flights which are no longer bookable or those whose prices have changed
- a Report Coordinator 305 aggregates and stores the results of the upstream engines. Its role is to determine which part of the entire flights data must be recomputed given available resources and based on the results of the previous engines. Such determination is done according to an algorithm.
In the example of the search platform 2, all the analysis engines work in parallel to Feed and Search Engines (302 and 303), so their work has no negative performance impact for the clients (no response time degradation).

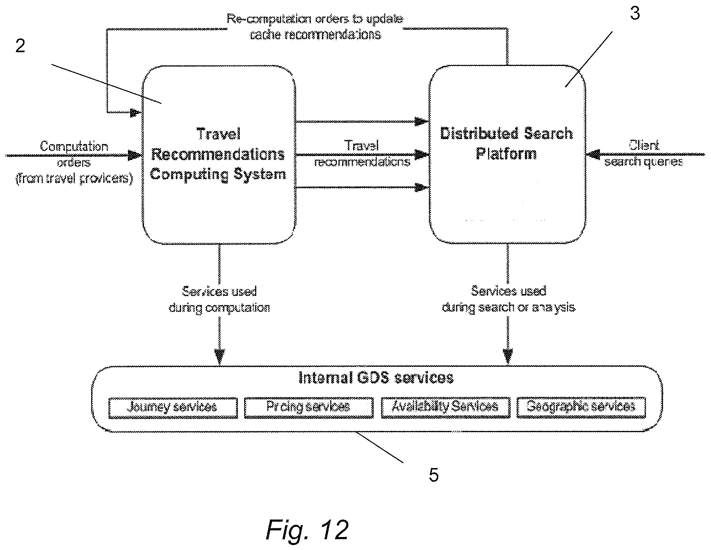

With reference to Figure 12 an example of a coupling between search platform 3 and computation platform 2 is represented. Such system includes a search platform 3 which is fed by the computation platform 2, such as the one described above in the sub-chapter "Computation Platform". Both platforms may also interact with other services 5, for example provided by a Global Distribution System (GDS). Figure 12 depicts the high level flow to follow in order to store entire catalogs of travel recommendation in the search platform.

As customers of the platform, the travel providers (airline, travel agency...) decide which part of their travel domain they want to integrate into the search platform. From that point, they send to the travel recommendations computing system a so-called massive query that is a series of re-computation orders to the travel recommendations computing system. Those order details the markets to consider (e.g. a list of city pairs for all days of the year to come) as well as the travel recommendations to generate (e.g. for every day, the best recommendations for journeys between 1 and 20 days long). Such orders can be re-evaluated frequently by the customer or they can serve as a base for a recurring computation.

The travel recommendations computation system makes use of internal services of the GDS to compute the requested recommendations. Among other things, to generate a recommendation, it may use journey services to retrieve the list of existing flights; pricing services to find the best combination of fares and flights; availability services to consult the current seats available for booking, etc.

As the recommendations are generated, the computing platform 2 sends the results to the search platform 3 for integration. The received recommendations are stored in dedicated memory locations to populate a global memory of pre-computed travel recommendations, becoming available for eventual clients' search queries. Once travel recommendations are integrated, some monitoring tasks take place in background to detect pre-computed travel recommendations which should be recomputed due to a low consistency with equivalent shopping recommendations. This monitoring may use the internal services 5 provided by the GDS.

When inconsistent recommendations are detected, the search platform 3 generates a series of batch re-computation orders (also referred to as "massive queries") and sends them to the computing platform 2. The latter will generate updated recommendations which will help in maintaining a good consistency of pre-computed travel recommendations (compared to results of re-computations).

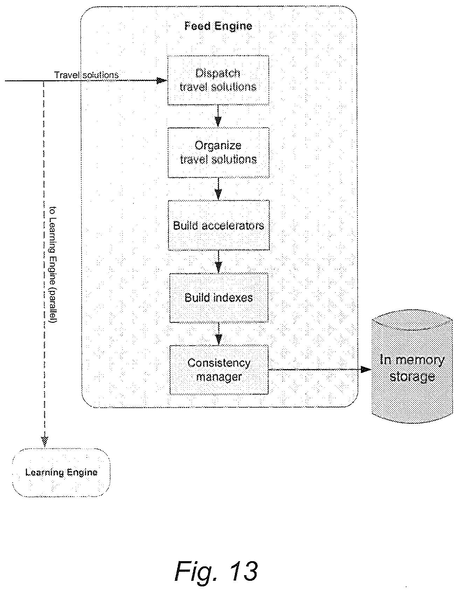

Figure 13 represents the structure and the functions of the Feed Engine 302 (see Figure 11). The Feed engine 302 receives groups of re-computed air travel recommendations returned by the computing platform 2, for example, all prices for all flights from Paris to London within a certain period of time (also referred to as "market PAR-LON"). The integration of those re-computed database query results occurs in several steps:

### - Dispatch re-computed travel recommendations

In the search platform 3, related data aims are being stored on the same physical machine to deliver very fast search response time. For example, two markets with the same origin city (PAR-LON and PAR-NYC) will land on the same physical machine. The Feed engine 302 extracts information from the group of recommendations (travel provider ID, office ID, market, geographic location...) to determine the physical machine(s) which will host the data. This data balancing mechanism makes use of well known distributing techniques such as round robin, or consistent hashing. As seen in well known data replication schemes, many machines can host the same group of recommendations to improve reliability, fault-tolerance, or accessibility.

### - Organize re-computed travel recommendations

The Feed Engine 302 receives batch of re-computed travel recommendations from computing platform 2. The incoming data are then grouped into what is called data sets, in a manner that suits better the search platform 3. Each search product provided by the presently described example of search platform 3 has a unique data organization strategy to optimize its performance. For the sake of the example, for a particular need a group of flights coming from the computing platform 2 could be organized in groups of identical city pairs and then be assigned to two types of data sets: 1) same city pair and direct flights only; and 2) same city pair and flights with connections.

### - Build accelerators

On top of that organization, the search platform 3 creates additional data sets that contain only meta-information about the pre-computed travel recommendations. These data help achieving very fast searches. For example, a data set of meta-information can host the cities reachable from an origin city and for each reachable city the cheapest price for city pair. Eventually, incoming search requests by the clients could benefit from this information to avoid looking at too many travel recommendations before returning solutions.

### - Build indexes

Like databases, the search platform 3 constructs indexes on top of data sets to provide fast access time. For pre-computed air travel recommendations, the searches criterions are very open: one can search prices in a given range of date, for a given range of price, for arbitrary destination cities, etc. Instead of creating one index per search criteria, the search platform 3 uses a multi-dimensional data structure (such as the K-D-B-tree) to construct a single index per data set, while maintaining an equally efficient access to data whatever the search criteria. This approach limits the amount of storage used. If two travel providers share common travel recommendations, and the fares are public (contrary to negotiated fares of travel providers, only applicable to specific office ID), those can be shared in the system storage to gain space and reduce hardware cost.

### - Consistency manager

When new pre-computed travel recommendations are available from the computing platform, the corresponding data sets are updated with new or less pre-computed travel recommendations, and their index is rebuilt. Concurrently, the impacted data sets may be searched for travel recommendations. To prevent impacting on-going searches (both in term of performance and consistency), the Feed Engine 302 manages revisions of data sets. While searches are being performed on revision n of a data set, a feed constructs revision n+1. When the revised data set is constructed and indexed it becomes the new reference data set for searches. The previous data set is deleted from the storage memories of all the physical machines in the distributed system which hosts the data set, shortly after. This ensures those data are kept available for on-going searches until they finish and thus prevent consistency issue

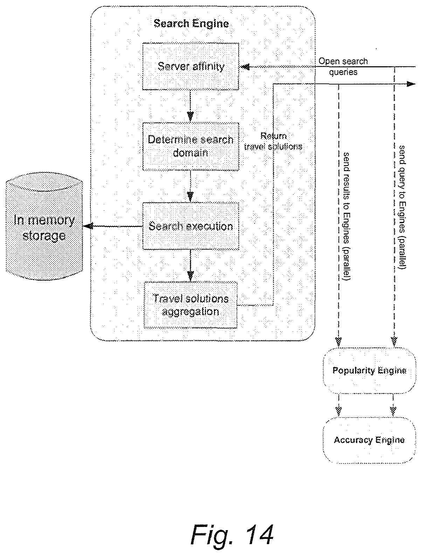

Figure 14 represents the search engine 303 (see Figure 11). The search engine 303 receives air travel search requests from connected clients and crawls into all the data to return the best pre-computed recommendation. This process occurs in several steps:

### - Server affinity

The incoming search request must be processed by a specific search product provided by the search platform 3. From that point, it is routed to a physical machine that contains the data necessary for answering the request (assuming a distributed nature of the search platform 3). Beforehand, as described above, the pre-computed air travel recommendations were dispatched by the Feed Engine 302 to physical machines based on the specificities of the search product the recommendations were aimed at. The Search Engine 303 now performs the complimentary operation: it analyses the search query to answer to, and based on its type it determines the data to search and the physical machine(s) where they are located.

### - Determine search domain

Once the search request is forwarded to the relevant physical machine, the search engine determines the data set where to find meta-information related to the search query. The meta-information is used to locate all the data sets of air travel recommendations which contain potential solutions to the search query.

### - Search execution

Once all the potential pre-computed air travel recommendation are located, the search engine 303 parses all the multi-dimensional indexes to collect the pre-computed best travel recommendations based on the criteria expressed in the search query, e.g., the price range, the date range, the flight carrier etc. The search engine 303 can take advantage of the previous meta-information to decide not to search into all potential pre-computed travel solutions. For the sake of the example, suppose the search query asked for the best price departing from a specific city NCE. Suppose during the search a travel for destination city PAR was found for 100 €. If the meta-information states that the lowest prices for city NYC is 500euro, the search engine 3 will not even try to search solutions from NCE to NYC. This further decreases the response time of the search transaction.

### - Related Searches

In case the Search Execution step returned no pre-computed travel recommendations, the user's query may be too restrictive: the reasons for the lack of match are thus analyzed for each city pair previously considered. As an example, reasons may be that no flight exists in the specified date range, or flights exist but are more expensive than the limit expressed in the query. In case the user's query is too restrictive, the Search Engine 303 implements a fallback strategy to return recommendations which relates closely to the constraints expressed in the original query. It relaxes the constraints on the plurality of parameters (wider date range, higher price limit...) and loops back to a search execution step. The loop ends either when some recommendations are found, when a configured number of retry is reached or when a maximum allowed time for retry is reached. In case the fallback strategy does not return any recommendation, another fallback strategy is implemented when applicable. In case the requested destination has a geographic meaning (e.g., city, country), the Search Engine 303 uses the geographic services provided by the GDS (not part of the invention) to determine close geographic regions, it widens the destination constraints of the original query and loops back to the search execution step, in the manner explained above. If both fallback strategies fail to retrieve recommendations, an empty result is returned.

### - Travel solutions aggregation

Once all pre-computed solutions to the search query are found, the search engine 303 performs a pass to merge identical results which could have been returned from different data sets. This case can arise for example if the search had to look into a data set containing the cheapest direct flights for a city pair, and in another data set containing all flights (direct and with stop).

At last, the found pre-computed travel solutions are organized based requirements of the search query: group solutions by destination city, by date, by ascending price, by airline (either direct or with connections). The result is then returned to the client.

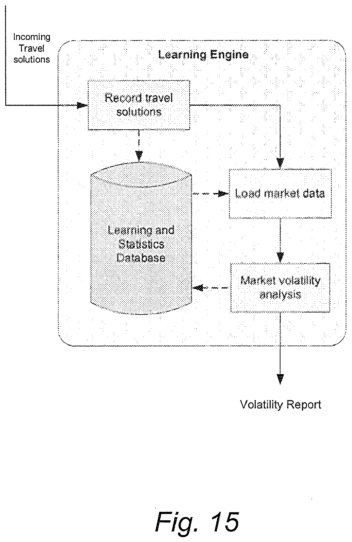

Figure 15 shows the Learning Engine 304 (See Figure 11). Learning Engine 304 includes a Learning and statistics Database. The purpose of the Learning Engine 304 is to detect the pre-computed air travels whose prices do not change frequently and thus which do not need frequent re-computation by the computation platform 2 to stay accurate (i.e. the pre-computed database query results stored in the search platform 3 are correspond to results of a hypothetic re-computation by the computation platform 2).

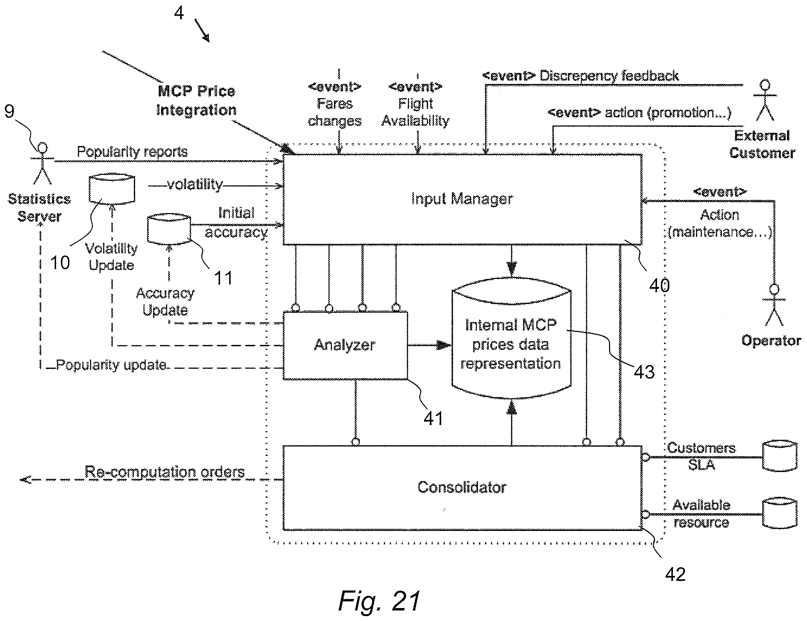

The Learning Engine 304 bases its logical analysis on a general property of air travel flights: the price of a flight scheduled in the coming days is very volatile, i.e., if the same flight (same departure date) is priced again a day after, its price has likely changed. On the contrary, the price of a flight scheduled several months away is unlikely to change if it is price again a day after or a week after. The Learning Engine 304 associates a volatility model to each market based on the property detailed above. It maintains the volatility model 7 (cf. Fig. 21) (and rectifies it if needed) based on the pre-computed travel recommendation it receives every day. Similar considerations may apply to other kind of data kept by other examples of search platform 3, wherein the specific model of data volatility depends on the nature and content of the data.

### - Record price of travel recommendations

When incoming re-computed travel recommendations are received, they are duplicated and one copy goes to the Learning Engine 304. Pre-computed travel recommendations are grouped by market, i.e., recommendations for travels for one city pair, for days of the coming year. Note that not all days of the year yield recommendations, because the system might instruct the computing platform 2 to re-compute only volatile flights across small range of dates. The Learning engine 304 extracts the prices of the incoming travel recommendations and record them in a dedicated Learning and Statistics Database, along with their date of computation. Those prices serve as a basis for price comparison for future air travel data integrations.

### - Load market data and rectify volatility model

The Learning Engine 304 loads all the pre-computed priced travel recommendations previously stored in his dedicated database for the incoming market. It compares the saved prices with the incoming prices available. The Learning Engine 304 adapts the volatility model for the market depending of the outcome of prices comparison:
When two identical flights have different prices, the difference is stored as a statistics in the Learning and Statistics Database. When differences occur too frequently, the volatility model is updated: the span date range is marked more volatile. Storing statistics about change frequency helps mitigate the effect of price changes due to events occurring on a regular basis, like holidays season. If two identical flights have the same price for a longer period than what is expected based on the model, the model is also updated: the span date range is marked as less volatile.

### - Generate volatility reports

Once the analysis of all the incoming pre-computed travel recommendations is finished, the Learning Engine 304 generates a report which contains the revised volatility of the data which have just been integrated in the distributed search platform described herein. A volatility report is generated per customer ID (provider of the data) and is organized per market, per departure date.

The generated reports are sent to another Engine called the Report Coordinator 305. The latter will eventually use this source of information to decide of the subset of the pre-computed air travel recommendations which must be recomputed depending on the available computing resource on the computing platform 2.

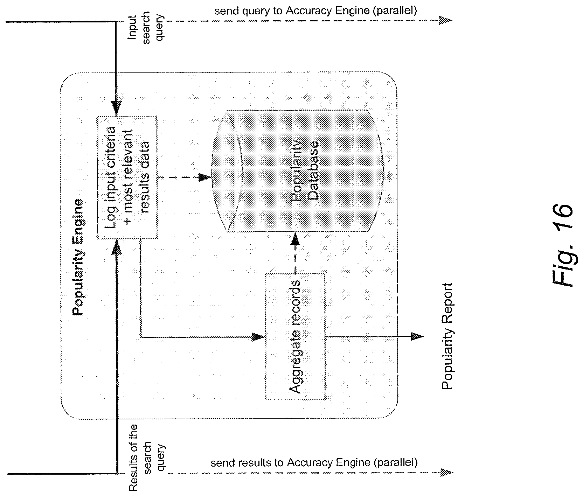

Figure 16 shows the Popularity Engine 6 (See Figure 1). Popularity Engine 6 includes a Popularity Database. On incoming search requests by the clients, the Popularity Engine 6 gets a chance to extract search trends out of users transactions. This gives insights about the popularity of travel prices stored in the search platform 3. The Analysis is performed in steps:

### - Input and output analysis

Before reaching the search engine 303, the input search query is duplicated and one copy goes into the Popularity Engine 6. Symmetrically, the output of the search transaction is duplicated before being sent back to the user and a copy goes to the Popularity Engine 6. The Popularity Engine 6 analyses both input and output of a transaction to gain some popularity metrics and statistics. The analysis yields different information depending on the criteria of the input search query. For example: If the search query requested travel recommendations for a specific market (city pair), the engine can extract from the query a ranking on popular departure dates per market. If the search query requested travel recommendations from a single origin city, the engine can extract from the solution a ranking on preferred destination cities (or destination countries) per originating city and per price, date range, etc.

### - Storing statistics in database

The trends extracted from the input query and output solutions are stored on a dedicated Popularity Database. This storage may be distributed, so that any physical machine (where the Popularity Engine 6 operates) can benefit from the data produced on other physical machines of the system.

### - Aggregate Records and generate Popularity Reports

In parallel, a recurring job of the Popularity Engine 6 is to extract the statistics previously computed from the distributed database and to build some systemic popularity metrics. For example, based on the total number of search queries that were analyzed for popularity, extract a ranking of popular markets, i.e., markets which were most targeted by input queries, cheaper markets returned in output travel solutions, etc. Another possibility is to generate statistics about most popular market for given date ranges throughout the year, to extract trends for specific events like holiday season or generate statistics about most popular markets for different geographic zones in the world. This refinement helps extract more relevant popularity measures (e.g., on domestic flights...)
The generated reports are then sent to the Report Coordinator 305 to give him access to popularity metrics.

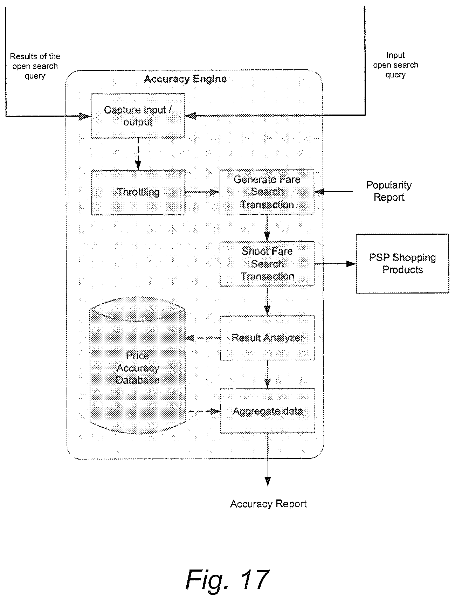

Figure 17 shows the Accuracy Engine 8 (See Figure 11). Accuracy Engine 8 includes a Price Accuracy Database. The goal of the Accuracy Engine 8 is to control pre-computed air travel recommendations and detect those whose price diverges too much from the real (i.e., current) shopping price. The principle of the engine is to use external shopping services (not part of the invention) to shoot shopping transactions and to compare the returned prices with that of the memory of pre-computed travel recommendations.

The accuracy engine 8 operates in several steps.

### - Use input and output transactions, with throttling

Like for the Popularity Engine 6, the Accuracy Engine 8 receives a copy of the duplicated input search query and output travel solutions returned by the search platform 3 to the requesting client. To avoid shooting too many real shopping transactions, which are expensive in hardware cost and in response time, a throttling pass is applied to operate on a subset of the natural traffic that goes through the search platform 3 described herein.

### - Generate Fare Search transactions

The Accuracy Engine 8 should generate fare search transactions which are diversified enough to analyze a representative subset of the travel recommendations stored in the system. To do so, the generation strategy is twofold: Generate fare search transactions based on travel popularity: the Accuracy Engine 8 accesses the Popularity Database 6 (presented earlier) to analyze the popularity of output solutions and keep only the most popular ones for further analysis. This maximizes the consistency experienced by users regarding pre-computed and stored prices vs. real shopping prices. Generate random transactions based on the contents of the memory of pre-computed travel recommendations. A random election of travels for analysis aims at providing eventual accuracy of the entire memory of pre-computed travel recommendations. It ensures good travel findability for the users, i.e., accuracy of unpopular flights is also monitored, though less often to limit hardware cost.

### - Aggregate data

The gathered accuracy metrics are stored in a dedicated, distributed accuracy database. A recurring job consolidates all the accuracy metrics into several reports (accuracy of solutions by customer, by market, by departure date...) and sends them to the Report Coordinator 305 for further usage.

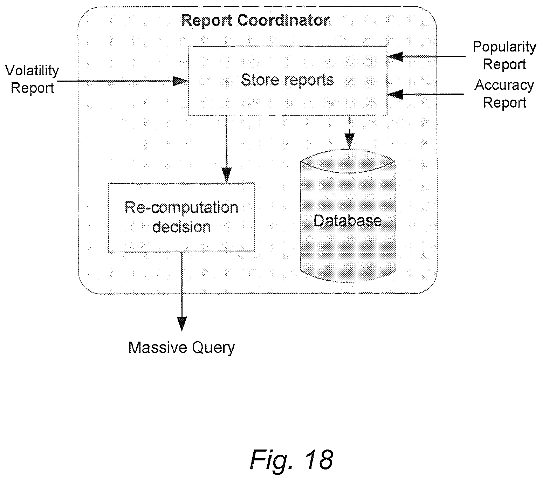

Figure 18 shows the Report Coordinator 305 (See Figure 11). The Report Coordinator 305 is the last analysis engine of the search platform 3 according to the example described here. Its role is to decide which part of the data in the search platform 3 is to be re-computed, based on all the metrics reported by the previous engines and according to the available computing resource on the computation platform 2, and to generate and issue re-computation orders directed to the computation platform 2.

The decision of re-computation is performed in several steps.

### Store Reports

All the metrics from the incoming volatility, popularity and accuracy reports are stored locally in a dedicated report database. This storage is done because the Report Coordinator 305 takes its decision based on previous metrics. For example, the Report Coordinator 305 infers the age of data stored in the memory of pre-computed travel recommendations based on the volatility reports. This information is then kept in the Report Database.

### Re-computation decision

The decisions made by Report Coordinator 305 are based on heuristics to balance data accuracy of the memory vs. computation resource on the computation platform 2. The basic approach is to re-compute the least accurate pre-computed travel recommendations (i.e. those pre-computed travel recommendations held by the search platform 3 with the lowest likelihood to still correspond to the result of a hypothetical re-computation by the computation platform 2), given the available resource on the computation platform 2. Among the least accurate data, the most popular ones are considered first for the generation of a re-computation order. The candidates for re-computation are selected by the Report Coordinator 305 in order to form groups of nearby travels in the flights domains (close date range for each market). This allows the computation platform 2 to mutualise some re-computations and further optimize its resource consumption.

Between each re-computation order, the Report Coordinator 305 makes use of the volatility models 7 (stored in the report database) and the inferred age of the pre-computed travel recommendations to update the forecast accuracy of all the remaining data in the search platform 3.

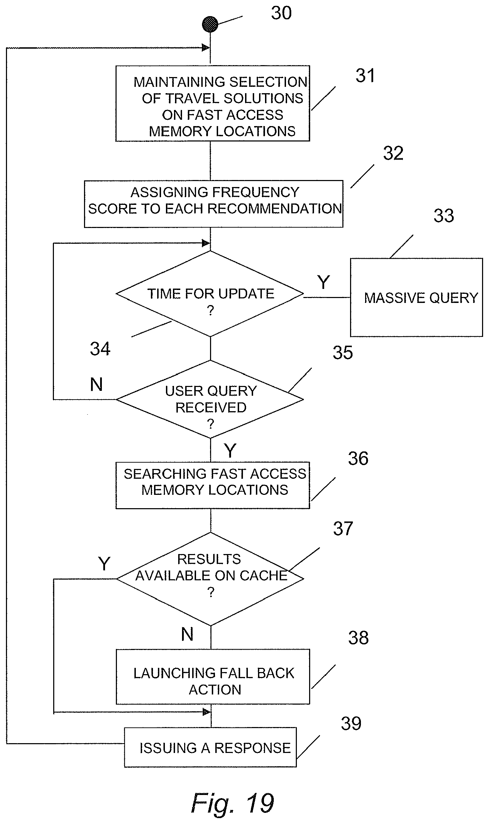

The method implementing the example of the search platform 3 described above is also represented in the diagram shown in figure 19. The method is an example of a pre-shopping tool (i.e. for generating priced travel recommendations according to non-binding travel queries) which operates in a distributed reservation system having access to a plurality of travel databases containing information on travel availability and fares according to a plurality of parameters, each travel query including a set of preferences each preference being related to a parameter selected among the plurality of parameters. The distributed reservation system includes a plurality of fast access memory locations where a selection of travel recommendations is maintained so that users can have a fast response to their queries. Subsequently, we refer to these fast access memory with the term of "cache made of pre-computed travel recommendations" even if those skilled in the art will appreciate that this term is technically not completely appropriate because, as opposed to a cache, the contents stored in the fast access memories represent entire travel catalogues of pre-computed priced travel data sets and not only a subset comprising of the most accessed travels of the catalogues. In other words, the term cache relates to "shopping transactions cache". Similarly, the information stored on those fast access memories are referred to as "pre-computed information" (e.g. "pre-computed travel recommendations"). The problem with the memory of pre-computed travel recommendations is that the data contained in the recommendations need to be updated in order for their price to keep consistent with the real prices found during shopping. This is a very costly (in term of time and system performances) activity and a balance must be found between consistency of information and system performances. One of the features of the present search platform 3 (and in particular of the present re-computation trigger platform 4 which includes an even more sophisticated approach that is described further below) is that the different travel recommendations are not updated at the same time and with the same frequency; rather a "frequency" score is assigned to each travel recommendation, according to which the update is scheduled: the information which is likely to be more volatile will be refreshed more frequently. The method begins at black circle 30 and then goes to box 31 where the search platform 3 maintains a memory made of pre-computed travel recommendations on a plurality of fast access memory locations, each travel recommendation including information on availability and price of a specific travel, sorted by at least one of the plurality of parameters. The sorting and indexing of the pre-computed travel recommendations in the memory can be done in several ways as explained above: this is important to identify the right information in the shortest time possible. A score indicative of a needed refresh frequency is then assigned to each of the pre-computed travel recommendations (box 32). This score will be used to determine when a refresh of the information should be made. The refresh (box 33) according to an example of the present search platform 3 is done with a batch processing as explained above: in an example of the present search platform 3, a batch re-computation order is launched through a dedicated subsystem, e.g. the example of the computation platform 2 as described in detail above. The launching of such batch re-computation order (box 34) can be done at fixed time or invoked by a user or being triggered by specific events: for example the massive query could be done every pre-determined period of time (e.g. at the end of day or every hour); it could be automatically performed when a critical mass of queries is received or when the maximum capacity is reached; or again it could be requested by the administrator of the system or by the travel providers. When a user query is received (box 35) the system, it tries first the search within the fast access memory locations (box 36). If no solution is found (box 37) then an optional fall-back action could be launched (step 38): if no fall-back action is provided a message to the user will advise that no results are available in the search platform 3. Alternatively a new search could be launched with adjusted parameters, considering that the user's query may be too restrictive: the reasons for the lack of match are thus analyzed for each city pair previously considered. As an example, reasons may be that no flight exists in the specified date range, or flights exists but are more expensive than the limit expressed in the query.

In case the user's query is too restrictive, the Search Engine 303 implements a fallback strategy to return recommendations which relates closely to the constraints expressed in the original query. It relaxes the constraints on the plurality of parameters (wider date range, higher price limit...) and loops back to a search execution step. The loop ends either when some recommendations are found, when a configured number of retry is reached or when a maximum allowed time for retry is reached. In case the fallback strategy does not return any recommendation, another fallback strategy is implemented when applicable. In case the requested destination has a geographic meaning (e.g., city, country), the Search Engine 303 uses the geographic services provided by the GDS to determine close geographic regions, it widens the destination constraints in of the original query and loops back to the search execution step, in the manner explained above. If both fallback strategies fail to retrieve recommendations, an empty result is returned. Yet another possible solution would be to launch a query to external databases to find the requested travel recommendation and to enrich the cache of pre-computed travel recommendations kept in the search platform 3. If a result is obtained the memory of pre-computed travel recommendations will be enriched with this new information. In any case a response is issued to the user (step 39). The score of the travel recommendations might need an update as well. In the example described herein, the queries are sent by clients looking for pre-shopping information, i.e. information on e.g. trip availability, prices, time or general information not necessarily aimed at completing a reservation. In an example of the present database system 1, the search platform 3 receiving the queries and performing the database enquiries for satisfying user queries is separate from the actual reservation system, but those skilled in the art will appreciate that the two search platforms 3 (one for pre-shopping and another one for reservation) could be integrated together, as already briefly outlined above.

In summary, the search platform 3 presented herein can be characterized by the following points:
1. A method in a distributed reservation system for generating priced travel recommendations according to non-binding travel queries, the distributed reservation system having access to a plurality of travel databases containing information on travel availability and fares according to a plurality of parameters, each travel query including a set of preferences each preference being related to a parameter selected among the plurality of parameters, the method including:
   - maintaining a plurality of fast access memory location including a selection of pre-computed travel recommendations each travel recommendation including information on fares and/or availability for a specific travel, sorted by at least one of the plurality of parameters;
   - assigning to each of the pre-computed travel recommendations a score indicative of a needed refresh frequency;
   - updating the selection of pre-computed travel recommendations by launching a massive query in the plurality of databases for refreshing the information included in at least some of the travel recommendations, wherein the frequency of the refresh of each travel recommendation depends on the assigned score;
   - responsive to a travel query being received by the system, searching the plurality of fast access memory locations, to find those travel recommendations which fulfil the preferences included in the travel query;
   - issuing a response to users for the travel query and updating the score of the selection of travel recommendations.
2. The method of point 1 wherein the score indicative of the needed refresh frequency includes a value indicative of the volatility of the information on availability and/or fares of the travel recommendation.
3. The method of any preceding point wherein the score indicative of the needed refresh frequency includes a value indicative of the popularity of the travel recommendation.
4. The method of any preceding point wherein the access to the plurality of travel databases and the step of enriching the selection of pre-computed travel recommendations is done by means of a dedicated sub-system.
5. The method of any preceding point further comprising:
   - dividing the selection of pre-computed travel recommendations into a plurality of homogeneous groups, wherein each travel recommendation in an homogeneous group has at least a given number of parameters with the same value, and storing each group in one of the fast access memory locations.
6. The method of any preceding point wherein the step of launching the massive query is done at given time interval.
7. The method of any preceding point wherein the massive query is done with a batch process.
8. The method of any preceding point wherein the travel recommendations stored on the plurality of fast access memory locations are indexed according to a multi-dimensional data structure.
9. The method of any preceding points further including:
   - responsive to no results being obtained by searching the plurality of fast access memory locations, launching a series of closely related queries with relaxed constraints on the plurality of parameters, in the aims of returning approaching results for information purposes.
10. The method of any points 1 to 8, further including:
   - responsive to no results being obtained by searching the plurality of fast access memory locations, issuing an alert message to the user.
11. A computer program comprising instructions for carrying out the steps of the method according to any preceding point, when said computer program is executed on a computer.
12. A computer program product including computer readable means embodying the computer program of claim 10.
13. A software tool for pre-shopping system including the method of any point 1 to 10.
14. A distributed data processing system for managing pre-shopping travel queries, the distributed data-processing system having access to a plurality of travel databases containing information on travel availability and fares according to a plurality of parameters, each travel query including a set of preferences each preference being related to a parameter selected among the plurality of parameters, wherein the system comprises one or more components adapted to perform the method of any point 1 to 10.
15. A service deployed in a data processing system for implementing the method of any point 1 to 10.

### The re-computation trigger platform

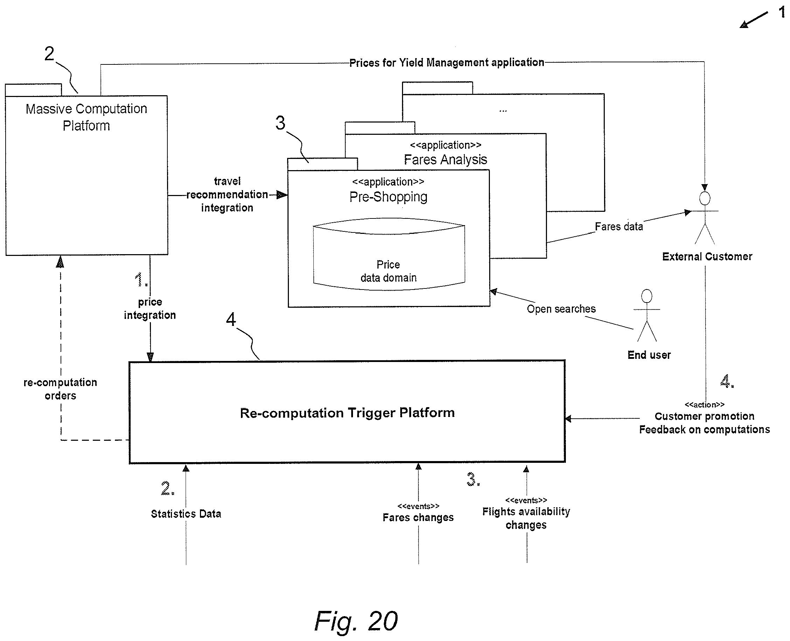

Figure 20 shows another overview of an example of the distributed database system 1. The examples described subsequently relate again to databases in the travel industry. Specifically, an example is presented in which the computation platform 2 maintains data on air travel offers and the re-computation trigger platform 4 stores prices related to these air travel offers which the computation platform 2 calculates on the basis of calculation rules, in particular flight fares and their associated calculation rules, thus an example fitting to the examples of the computation platform 2 and the search platform 3 which have been described in detail above. However, it should be noted that this is an example only for the purpose of illustrating the present re-computation strategy in more detail. The re-computation strategy presented herein can be applied to any kind of data and database query results independent from the structure and/or semantics of the data and the cached results.

As described above, two of the main entities of the database system 1 are the re-computation trigger platform 4 and the computation platform 2. In the example of Figure 20, the computation platform 2 corresponds to the example of the computation platform 2 as described above in the sub-chapter "Computation Platform". The re-computation trigger platform 4 and the computation platform 2 are coupled via at least one communication link which is/are utilized to transmit re-computation orders from the re-computation trigger platform 4 to the computation platform 2 and, in response, pre-computed priced travel recommendations (herein also briefly referred to as "prices") back from the computation platform 2 to the re-computation trigger platform 4 and to the search platform(s) 3.

The re-computation trigger platform 4 is equipped with additional communication interfaces for incorporating data which it uses for the determination of the accuracy probabilities of the mirrored pre-computed database query results. These interfaces include, for example, communication links for incorporating statistical data which forms the basis of the probabilistic model and for receiving asynchronous real-time events such as fares changes and flight availability announcements populated by airlines or customer promotion campaigns.

In addition, the database system 1 comprises at least one search platform 3 that organizes and maintains data which can be queried by end users or external customers such as travel agencies. Search platforms 3 are populated and updated by the computation platform 2 via respective communication links between computation platform 2 and search platforms 3. This population and update might be, on the one hand, controlled by the search platform 3 itself, as it optionally includes an update mechanism based on the update frequency score as described in detail above. Hence, the search platform 3 itself is able to issue batch re-computation orders to the computation platform 2. In addition, the population and update might be triggered by the re-computation orders issued by the re-computation trigger platform 4 to the computation platform 2.

As described in general above and more specifically below, in response to the re-computation orders received from the re-computation trigger platform 4, the computation platform 2 re-calculates the prices of the travel recommendations and returns them to the re-computation trigger platform 4. Simultaneously, however, the computation platform 2 also forwards the recomputed priced travel recommendations to the search platforms 3 and which store them as well (as indicated by "travel recommendation integration" in Figure 20). Consequently, also the application platforms 3 store the pre-computed priced travel recommendations which are queried by users, on the basis of the re-computation and update strategy implemented by the re-computation trigger platform 4. Thus, the present re-computation and update strategy is leveraged to applications which provide benefits to users, e.g. in form of instant responses to open queries (in addition to the update and re-computation methods which may already be implemented in the search platforms 3 themselves, as described in detail above in the sub-chapter "Search Platform"). In such an arrangement, the re-computation trigger platform 4 acts as a control platform arranged to control and trigger the updates of the search platforms' 3 memories. Thus, the pre-computed mirrored database query results stored in the re-computation trigger platform 4 are not actually accessed or queried by any users or customers, but merely form the control data basis on which the re-computation strategy is performed.

However, in other arrangements, the re-computation trigger platform 4 may also be directly queried by users or customers, or - in other words - the present pre-computation update strategy may be implemented directly in one or several search platform(s) 3 as opposed to a separate control entity. Hence, in these arrangements, the re-computation trigger platform 4 is integrated into one or several (if present) search platform(s) 3. In this case, the re-computation trigger platform 4 may operate directly on the pre-computed database query results / priced travel recommendations stored in the fast access memory of the search platform 3 (as opposed to maintain an own copy of the data for making the re-computation decisions). Additional managing, control or meta data used to implement the re-computation and update strategy of the re-computation trigger platform 4 may be kept either in a separate memory dedicated to the re-computation trigger platform 4 or in the fast access memory of the search platform 3 utilized for storing the pre-computed priced travel or in any other suitable memory of the combined search and re-computation trigger platform 3 and 4.

The search platforms 3 comprise, for example, a pre-shopping application platform, a fares analysis application platforms and other platforms. The pre-shopping application platform is queried by end users who wish to find out information about flight availability and prices. For example, an end user could direct a query to the pre-shopping application in order to obtain an overview of prices of travel offers during the holiday season departing from Nice below 500 Euros. Due to the pre-computed priced travel recommendations stored in the pre-shopping search platform 2 which are updated in line with the present pre-computation update strategy, prices of the respective flights do not need to be computed at the time of the occurrence of the query. Rather, a list of travel offers fulfilling these rather unspecified constraints can be returned very fast on the basis of the priced travel recommendations cached in the pre-shopping application platform. The user can then select a travel from the returned list that suits him/her best and can then issue a further request for actually booking this travel. The second request is then processed by a booking engine (not shown) which calculates the current and actual price and suggests a binding offer to the user.

Now having a closer look at the structure of the re-computation trigger platform 4 which is depicted by Figure 21, the re-computation trigger platform 4 is composed of three modules:
- The input manager 40 is responsible for receiving inputs such as pre-computed database query results from the computation platform 2, asynchronous real-time events and other information such as statistical data to feed and update the probabilistic model.
- The analyzer 41 utilizes the probabilistic model on the basis of which it is arranged to determine candidate cached query results to be updated.
- Finally, the consolidator 42 amends the probabilities determined by the analyzer 41 and - when necessary - also the probabilistic model on the basis of observed real-time events (the latter is not shown in Fig. 21).

In addition, the re-computation trigger platform 4 includes an internal database 43 which keeps the cached priced travel recommendation data. This representation only retains attributes of the price information which are relevant for assessing the out-of-date probabilities and deciding on the re-computation decision, such as, for example: city pair, the departure date, stay duration, and date of last computation, all of which being outputs of computations returned by the computation platform 2. Other data utilized by the computation platform 2 in order to perform its computations such as fares are not mirrored to the re-computation trigger platform 4 as they are not necessary to perform the re-computation update strategy. On the other hand, however, the re-computation trigger platform 4 enriches its data with meta-data attributes (which are not part of the data sets returned by the computation platform 2), such as an initial presumed accuracy (chances that a price just re-computed by the computation platform 2 differs from calculation for booking), volatility (indication of the probability that a price differs from calculation for booking since its last computation) and a popularity (how often the flight is searched for and booked). The data needed for setting these attributes is kept in external databases such as a volatility database 10, an initial accuracy database 11 and statistics servers 9. The meta-data attributes represent the probabilistic model on the basis of which the analyzer 41 determines the probabilities whether cached prices might be outdated (as will be explained in more detail below). Volatility database 10 may be connected and interact with the learning engine 304 as described above in connection with the search platform 3 (cf. Figures 11 and 15). Statistics servers 9 may correspond or be even identical to or fed by the popularity engine 6 as described above in connection with the search platform 3 (cf. Figs. 11 and 16). Initial accuracy database 11 may correspond to or be even identical accuracy engine 8 as described above in connection with the search platform 3 (cf. Figures 11 and 17).

The input manager 40 is arranged to convert and integrate all the heterogeneous sources of information into the local representation database 43 of the prices returned by the computation platform 2. It records events and actions that potentially impact modelled prices. These events include customer promotions and customer discrepancies feedback. Furthermore, flight availability events like flight cancellations do not only invalidate the cached travel recommendations which are directly based on the cancelled flight, but may also influence parallel stored data such as flights of the same city pair which are scheduled at the same time of the cancelled flight. These real-time events are then forwarded to the consolidator 42 which processes them further in order to amend out-of-date probabilities and re-computation decisions.

Due to the amount of information involved in caching the priced travel recommendations, it is beneficial to employ encoding techniques. By this, the priced data cached in the re-computation trigger platform 4 is globally mapped to the underlying data domain kept in the computation platform 2 while reducing costs for storage resources significantly. Probabilistic encoding is, for example, implemented by using Bloom Filters. The effect of such encoding is twofold. First, Bloom filters are conservative. They allow to positively track at least and in any case those prices which are probably impacted e.g. by a real-time event indicating fares changes, but they are not wrong on the reverse, prices which are considered to be not affected are actually not affected. So there is no risk of failing to recognize prices potentially influenced by such a fares change event. Secondly, the amount of false positive indications strictly depends on the allocated size of the Bloom Filter, so one can limit their occurrence as needed.

The second module, the analyzer 41, performs the first, general level of determination of the probabilities whether the cached priced travel recommendations are outdated based on the model of probabilistic degradation of the accuracy of the pre-computed prices kept in the re-computation trigger platform 4. It examines and evaluates the meta-data added to the prices by the input manager 40, as explained above. The probabilistic model represented by this meta-data thus includes metrics regarding price volatility included by the volatility database 10, initial accuracy of prices incorporated from the initial accuracy database 11 and the popularity of flight recommendations as returned by popularity reports from the statistics servers 9. It outputs probability and priority information regarding the cached prices to the consolidator 42, i.e. indications which prices need to be recomputed with priority based on the static probabilistic information only (i.e. without considering any event).

There are several ways of utilizing the information of the probabilistic model in order to prioritize and to decide which prices to re-compute next. The analyzer 41 is configurable to apply those strategy or a strategy mix depending on the situation (e.g. in accordance to an agreement with the customer owning the underlying travel data in the computation platform 2, depending on the amount of data, depending on the available computation resources, depending on the objection in which way the cache should be optimised). The following strategies may be applied:
- Accuracy of prices: This aims at maximizing the global accuracy of the date domain. Presumably inaccurate prices are re-computed first.
- Accuracy of prices, weighted with the popularity: Among the priced which are likely to be inaccurate, more popular prices will be re-computed with higher priority than less popular prices.
- Accuracy of prices, weighted with the popularity and by their age:
   Like the previous strategy, but also taking into account the time of the last re-computation. This strategy prevents re-computation starvation caused by very volatile prices, in particular in the context where re-computation resources are limited as compared with the amount of prices which generally should be re-computed.
- Modulate the popular city pairs based on their geo-location and on the re-computation hour: This strategy additionally takes statistics into account which city-pair flights are queried more often at particular times of a day. As an effect, frequent re-computations are avoided at those times at which flights of specific city pair are seldom accessed (because inaccurate cached data does not harm as long as respective queries actually do virtually not occur).

As a side effect, the analyzer 41 updates the volatility model database 10 based on the values of recently re-computed prices received from the computation platform 2 and incorporated into the re-computation trigger platform 4. As the analyzer can track the actual volatility of cached prices based on repeating re-computations, it can feed these statistical information back to the volatility model database 10. To update the volatility model, the analyzer 41 counts the number of differences between the newly computed price results and the previously received price values. From these differences it updates the volatility parameters for the respective parts of the analyzed prices.

Likewise, the analyzer 41 may update the initial accuracy database 11 in the same manner. It may also ask for other popularity reports, for example, if prices from new city pairs have been integrated in the re-computation trigger platform 4 for the first time. In case there are no history and statistical data, respectively, for volatility, accuracy or popularity of prices, the analyzer 41 performs its processing with default parameters to be as conservative as possible.

Turning now to the third module, the consolidator 42 performs the second level of the probability determination by taking into account incoming real-time events. In addition, it is the entity which generates the re-computation orders and issues them to the computation platform 2. It takes the outputs of the analyzer 41 as a base for its decision. These provide a first estimate of the re-computation priorities for all prices of the data domain. Then, it overlays all the information gathered from the various sources of real-time events to amend the re-computation priorities. This results in enhanced re-computation priorities.

Optionally, the re-computation trigger platform 4 may consider any customer service level agreement such as, for example, "guarantee that all prices will be recomputed at least once every week", and amend the priorities accordingly. It selects those entries in the internal prices data representation 43 with the highest priorities first and marks them for re-computation. As the consolidator preferably has knowledge of the computation resources available at the computation platform 2, it is able to earmark as many cached prices as can be re-computed by the computation platform 2 in a particular time interval. It then sends the resulting re-computation order to the computation platform 2.

Information from real-time events is a means to improve the accuracy of the cached data over strict statistical modelling . They can be used to track what is really happening instead of only what was expected. It is a means to control the predictions of the statistical model and amend them/it when the predictions are proved wrong or inappropriate. Several classes of real-time events can be envisaged with respect to the present example:
Actors' events generally occur selectively (i.e. from time to time), but may have a drastic influence on the re-computation decisions. Externals customer may provide feedback on the discrepancies between cache and shopping that he is experiencing on his own platform. This feedback can be used to amend the accuracy predicted by the statistical model and thus force sooner re-computations when needed. When a provider of data stored in the computation platform 2 (e.g. a travel provider offering travels) performs a promotion campaign promoting flights on certain city pairs, it can be assumed that these prices are more volatile and get outdated more often. Thus, the re-computation frequency of these prices during the promotion campaign might be needed to be increased. As another example, a maintenance operation for the computation platform 2 may be necessary from time to time or operational issues may be experienced within the system 1. In such cases, the re-computation trigger platform 4 can be commanded to generate less or no re-computation orders until the maintenance is done and the issue is recovered, respectively.

Availability events indicate a real-time status on the accuracy of cached flights. Depending on the statement of the event, it may be known with certainty that a specific price of the underlying data domain in the computation platform 2 has changed and the price cached by re-computation trigger platform 4 has therefore become invalid. However, also other prices may be affected, wherein the effect is uncertain and, therefore, the probability that these prices are outdated may be increased. For instance, a "class closed" event indicates that a particular booking class has become full for a particular flight. Seats in this flight and class are no longer bookable and thus the respective prices cached by the re-computation trigger platform 4 have become invalid with certainty. However, this might be considered as an indication that other classes of the same flight and/or seats in the same class in other flights departing shortly before or after this flight might get more volatile. Thus, their probabilities of getting outdated might increase and re-computing of these prices might be beneficial. As another example, it is experienced that low-cost carriers set the price of their seats depending on the flight occupancy. Upon notifications of occupancy changes, respective cached prices can quickly be re-computed and thus cache accuracy is improved/regained.

The implications of changes-of-fares events are difficult to estimate. Simply said, fares contain information and logic such as rules which are used to calculate a price of a particular flight. Thus, when calculating the actual price of a particular flight, a set of fares is accessed, it is decided which fare is relevant and is actually to be applied and, finally, the price is calculated. Thus, there is a relationship "flight ↔ fare(s)" (which, however, also may change over time, as the constraints which fare applies to a particular flight can change). However, relations in the other direction "fare ↔ flights" are generally not tracked, i.e. it is not clear which fare does apply to which flights. Moreover, a change in a fare potentially impacts a huge amount of prices calculated from the underlying data domain.

In order to determine the impact of fares events, the communication between the computation platform 2 and the re-computation trigger platform 4 can be utilized to provide the re-computation trigger platform 4 with a mapping to fares applied by the computation platform 2 for computing prices. When computing prices in response to re-computation orders, the computation platform 2 records all fares accessed for calculating the requested prices. This information is then stored globally in a mapping fares ↔ flights and maintained during every computation by the computation platform 2. At the time a fares change event is received, the input manager 40 searches this global mapping in order to determine the flights impacted by the fares change event and marks them as "updated". Note that a fare change does not necessarily imply a price change for a travel recommendation, as briefly explained above.

The consolidator 42 first assesses the potential influence of the real-time event on the cached prices rather than initiating re-computation of cached travel recommendations without having considered the relationship of the event with the basic probabilistic model. Such events are first analyzed with respect to their representation in the probabilistic model. For events which are not predictable and, thus, not included in the probabilistic model at all like, for example, promotions campaigns or maintenance events, the events are processed as soon as possible. Events, however, which are represented in the probabilistic model at least to a certain extent like fares or availability changes, are accumulated and their appearance is compared with the predictions of the probabilistic model. When event peaks do not match the model locally, i.e. a burst of events is significantly outside the statistic underlying the probabilistic model, the impacted prices are marked as potentially outdated in order to re-compute them as soon as possible. By this, "noise" caused by events already present in the probabilistic model and therefore already considered by the determinations conducted by the analyzer 41 beforehand, is filtered out.

Optionally, for optimization purposes, the consolidator 42 works on a grid-view of the internal data representation 43, i.e. it considers groups of adjacent prices together during its algorithm instead of working on the set of prices in an isolated manner. In this approach, adjacent price data sets are seen as a single data set with aggregated properties' values. Working on aggregated data sets limits the generation of sparse re-computation orders, and thus increases mutualization and optimization opportunities at the computation platform 2. This reduces computation costs.

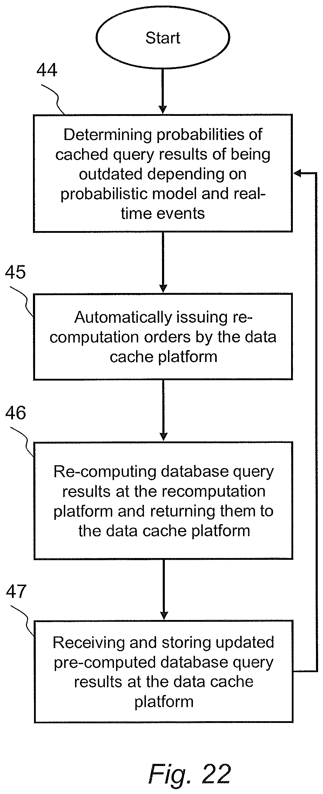

Figure 22 summarizes the above detailed description and gives an overview of the cache update method presented herein.

The process of keeping the cache of pre-computed database query results up-to-date starts with the determination 44 of probabilities of inaccurateness of the cached query results. This determination is composed of two activities which are located on two logical levels: Firstly and generally, a predictive model based on statistical and probabilistic data is employed in order to estimate the likelihood that a particular cached query result does not correspond to the query result (hypothetically) re-calculated. Secondly and more specifically, real-time events are taken into account which potentially impact and increase, respectively, the probability that cached query results are outdated. These real-time events are characterized by the fact that they, in general, do not indicate an inaccuracy of particular cached query results with certainty, but are indeterministic in this respect. Thus, on their occurrence, one can only draw probabilistic conclusions on the likelihood of accuracy and inaccuracy, respectively.

On the basis of the determined probabilities that the pre-computed mirrored database query results are outdated, the batch re-computation orders are automatically issued 45 by the re-computation trigger platform 4. These orders are received by the computation platform 2 which then re-computes the respective results and returns them 46 to the re-computation trigger platform 4. The computation platform 2 also updates the memory of the search platform(s) 3 accordingly. In turn, the re-computation trigger platform 4 receives the results and stores them 47 in a local representation 43. This concludes one update cycle and the next cycle re-iterates with the probability determination 44.

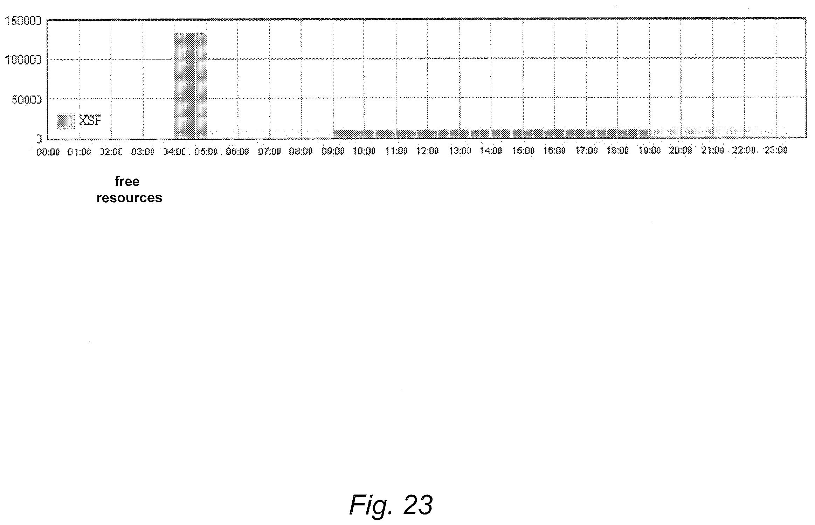

Next, a particular example with regard to timing of the procedure of the present cache update strategy is described with respect to Fig. 23. In this example, the re-computation trigger platform 4 is configured to generate batch re-computation orders every 20 minutes, i.e. a round or cycle of determining probabilities whether cached data is out-of-date and generating and issuing re-computation orders takes 20 minutes. The resources at the computation platform 2 are known a priori for a whole day and the re-computation trigger platform 4 is aware of the computation resources available at the computation platform 2 and is therefore able to synchronize the amount of re-computations with the computation platform's 2 available resources.

At the beginning of a re-computation cycle, the re-computation trigger platform 4 analyzes the current accuracy of the pre-computed mirrored database query results, i.e. the priced travel recommendations stored in the internal database 43. The round will yield a set of re-computation orders that will be processed by the computation platform 2 at the end of the 20-minutes round. Meanwhile, on computation platform side, orders from the last cycle are being computed and new price recommendation are generated and transmitted back to the re-computation trigger platform, where they are stored and available for analysis and update of recurring information in the next cycle.

Figure 23 shows that the computation platform 2 has significant available resources in the time interval between 04:00 and 05:00 a.m., so a lot of re-computations can be performed in this hour. Afterwards, however, no resources are available until 9:00 a.m., so no re-computation is possible at that time. Later during the day, from 09:00 a.m. to 7:00 p.m., some resources are available at the computation platform 2.

During the cycle starting at 04:20 a.m., the analyzer 41 analyzes the cache accuracy, while the consolidator 42 generates re-computation orders accordingly. Those orders will be implemented by computation platform 2 at 04:40 a.m.. The analyzer 41 focuses the MCP price recommendation it received at the beginning of the round. It counts the differences between the received prices and the previous prices whose value has been stored in an internal repository. Based on the differences, it amends the "volatility" recurring source of information. The input manager 40 saves the received MCP prices for further inspection.
In 4:40-to-5:00 a.m. cycle, the computation platform 2 processes the re-computation orders received from the re-computation trigger platform 4 during the interval 04:20 to 4:40 a.m.. The re-computation trigger platform 4 is aware that it cannot generate any re-computation orders for the time slice to come (05:00 a.m.) and its successors until 09:00 a.m. However, it still analyzes the data model continuously to update the current accuracy of all cache priced travel recommendations. It will do the same for every future cycle until 08:40 a.m.

At 08:40 a.m., the analyzer 41 determines that the accuracy of the cache decreased during the previous four hours without any re-computation. It generates re-computation orders accordingly over the following cycles, but only to a less extent due to the limited amount of available resources at the computation platform 2 from 09:00 a.m. to 7:00 p.m. Then, at 09:00 a.m., computation platform 2 starts processing the new re-computation orders it received in the interval before (i.e. 08:40 to 09:00 a.m.) and will stop after the end of the round lasting from 6:40 to 7:00 p.m.

After that, no further resources are available at the computation platform 2 throughout the night. Thus, the re-computation trigger platform 4 will not generate any further re-computation orders, but continue to analyze the cache accuracy on the basis of the probabilistic model and possibly incoming real-time events.

The present re-computation update strategy provides a means to automatically generate cache re-computation decisions. It determines which cached query results are to be re-computed and controls the re-computation also time-wise by taking into account the available computation resources at the computation platform. Thus, in general, the accuracy of the cached query results is estimated on the probabilistic model which models the up-to-dateness and out-of-dateness, respectively, over time. This out-of-date-analyses enable processing several billions of sets of data per hour underlying the re-computation of pre-computed mirrored database query results.

In summary, the re-computation trigger platform presented herein can be characterized by the following points:
1. A method of updating pre-computed mirrored database query results in a distributed database system, wherein the distributed database system comprises a re-computation trigger platform maintaining the pre-computed database query results and a computation platform for computing the pre-computed mirrored database query results based on data maintained in the computation platform, the method comprising:
   - determining, by the data cache platform, probabilities of the pre-computed mirrored database query results being outdated, wherein
   - the determination depends on a probabilistic model and on the occurrence of asynchronous real-time events,
   - the probabilistic model models discrepancies between the pre-computed mirrored database query results maintained in the re-computation trigger platform and presumed actual database query results,
   - the real-time events are indeterministic with regard to the expiration of the pre-computed mirrored database query results and only have a probabilistic influence on the discrepancies between the pre-computed mirrored database query results maintained in the re-computation trigger platform and presumed actual database query results,
   - the probabilities are generally determined based on the probabilistic model and are possibly amended on the occurrence of asynchronous real-time events;
   - automatically issuing, by the data cache platform, re-computation orders to the computation platform for updating pre-computed mirrored database query results on the basis of the determined probabilities of the pre-computed database query results being outdated, wherein pre-computed mirrored database query results having a higher probability of being outdated than others are ordered to be re-computed; and
   - receiving, at the data cache platform, the updated pre-computed database query results as results of the re-computation orders.
2. Method according to point 1, wherein the probabilistic model models a volatility of the data maintained in the computation platform based on statistical historic data.
3. Method according to point 1 or point 2, the method further comprising
   - analysing, at the data cache platform, whether incoming asynchronous real-time events are represented in the probabilistic model;
   - for real-time events which are not represented in the probabilistic model, issuing re-computation orders regarding the respective particular pre-computed mirrored database query results as soon as possible;
   - for real-time events which are represented in the probabilistic model, accumulating such real-time events over a certain period of time, comparing the actually occurred and accumulated real-time events with their representation in the probabilistic model and, if the actually occurred accumulated real-time events deviate from their representation in the probabilistic model to a given extent, issuing re-computation orders with respect to potentially affected pre-computed mirrored database query results as soon as possible.
4. Method according to any one of the previous points, wherein the data cache platform, when determining the probabilities of the pre-computed mirrored database query results of being outdated and issuing the re-computation, considers grids of pre-computed mirrored database query results corresponding to groups of adjacent sets of data maintained in the computation platform.
5. Method according to any one of the previous points, wherein the re-computation trigger platform issues the re-computation orders based on the amount of available computation resources at the computation platform.
6. Method according to any one of the previous points, wherein the distributed database system is a travel reservation system, wherein the computation platform maintains information on travel availability and fares and the re-computation trigger platform maintains priced travel recommendations calculated from the travel availability information and the fares.
7. Method according to point 6, wherein the real-time events comprise flight fare changes, airplane seat availability changes, client flight ticket requests and/or flight cancellations.
8. Method according to any one of the previous points, wherein the distributed database system comprises at least one application platform connected to the computation platform, the at least one application platform maintaining and organizing the pre-computed database query results, the database query results stored in the at least one application platform being populated and/or updated by the computation platform as a result of the re-computation orders issued by the data cache platform.
9. Re-computation trigger platform maintaining pre-computed database query results computed by a computation platform based on data maintained in the computation platform, the re-computation trigger platform configured to:
   - determine probabilities of the pre-computed mirrored database query results being outdated,
   - wherein the determination depends on a probabilistic model and on the occurrence of asynchronous real-time events,
   - wherein the probabilistic model modelling discrepancies between the pre-computed mirrored database query results maintained in the re-computation trigger platform and presumed actual database query results,
   - wherein the real-time events are indeterministic with regard to the expiration of the pre-computed mirrored database query results and only have a probabilistic influence on the discrepancies between the pre-computed mirrored database query results maintained in the re-computation trigger platform and presumed actual database query results,
   - wherein the probabilities are generally determined based on the probabilistic model and are possibly amended on the occurrence of asynchronous real-time events;
   - automatically issue re-computation orders to the computation platform (3) for updating pre-computed mirrored database query results on the basis of the determined probabilities of the pre-computed database query results being outdated, wherein pre-computed mirrored database query results having a higher probability of being outdated than others are ordered to be re-computed; and
   - receive the updated pre-computed database query results as results of the re-computation orders.
10. Re-computation trigger platform according to point 9, being further configured to
   - analyse whether incoming asynchronous real-time events are represented in the probabilistic model;
   - for real-time events which are not represented in the probabilistic model, issue re-computation orders regarding the respective particular pre-computed mirrored database query results as soon as possible;
   - for real-time events which are represented in the probabilistic model, accumulate such real-time events over a certain period of time, compare the actually occurred and accumulated real-time events with their representation in the probabilistic model and, if the actually occurred accumulated real-time events deviate from their representation in the probabilistic model to a given extent, issue re-computation orders with respect to potentially affected pre-computed mirrored database query results as soon as possible.
11. Non-transitory computer readable storage medium having computer program instructions stored therein, which when executed on a computer system cause the computer system to:
   - determine probabilities of pre-computed mirrored database query results being outdated,
   - wherein the determination depends on a probabilistic model and on the occurrence of asynchronous real-time events,
   - wherein the probabilistic model modelling discrepancies between the pre-computed mirrored database query results maintained in the computer system and presumed actual database query results,
   - wherein the real-time events are indeterministic with regard to the expiration of the pre-computed mirrored database query results and only have a probabilistic influence on the discrepancies between the pre-computed mirrored database query results maintained in the computer system and presumed actual database query results,
   - wherein the probabilities are generally determined based on the probabilistic model and are possibly amended on the occurrence of asynchronous real-time events;
   - automatically issue re-computation orders for updating pre-computed mirrored database query results on the basis of the determined probabilities of the pre-computed database query results being outdated, wherein pre-computed mirrored database query results having a higher probability of being outdated than others are ordered to be re-computed; and
   - receive the updated pre-computed database query results as results of the re-computation orders.
11. Computer program for instructing a computer to perform the method of anyone of points 1 to 8.

### The search results processing and display sub-system

According to another aspect, a way of processing and displaying requests by the clients is provided at the search platform(s). This processing allows to return and to display the pre-computed database query results fulfilling the criteria indicated by the client's database query in a structured way.

This approach is generally based on the idea to have one or more categories of database query results, wherein each category has a specific meaning for the user. For example, a category could be "query results most recently updated". Another category could be "query results most often returned to clients". According to the present approach, at a first level, the database query results fulfilling the criteria specified by a client request are sorted into such categories. At a second level, the results within each category are sorted or ranked. The categorized and ranked results are then returned to the client which may display at least the top results or a couple of top results (e.g. the top three or the top five) in each category in a particular manner. These "category winner" or "category winners" may, for example, presented in a highlighted manner so that the user will be able to recognize which is the most recent result and which is the result most often frequented by client requests.

The example of this approach to process and display client query results presented subsequently is implemented by a computerized travel reservation system (CRS). However, it should be noted that this approach is generally applicable independent from the specific nature and content of the data underlying the database query requests. Of course, the specific categories to be defined depend on the content of the data. However, the approach to have categories in general and to rank the results within these categories can be employed for any kind of data.

The CRS may be used to store and retrieve information and conduct on-line transactions related to goods and services, such as the online purchase of tickets for air travel initiated by a customer accessing a travel service provider. In the context of air travel, a CRS is configured to respond to itinerary queries from the travel service provider by identifying particular flights that satisfy a given itinerary, and to make or book reservations. A CRS may be embodied in a global distribution system (GDS), which is a type of CRS that books and sells air travel tickets for multiple airlines. The examples of the client query results display processing and displaying approach facilitate selecting one or more particular travel options from among a larger number of possible travel options and presenting the particular travel options to a customer submitting an itinerary query through a travel service provider.

Travel service providers, such as travel agents and agencies, interacts with the CRS to search for travel options responsive to a query from a prospective customer. In response to an inquiry embodied in the search request, the CRS retrieves search results from one or more databases that include travel options which satisfy the search terms in the request. The CRS then classifies the travel options contained in the search results as belonging to one or more categories. For example, a travel option representing a flight itinerary returned by the search might be classified as belonging to a low cost flight category and to a fastest travel option category. One or more travel options from each category are then selected by sorting based on a ranking, and included in a best travel option subset of that category.

The travel options in these subsets are thus considered to represent the optimum or best travel options within in that subset's respective travel option category. Each subset thereby provides one or more travel options within a larger class of travel options that are considered as more desirable to the prospective customer. These selected travel options are then conveyed to the travel service provider for display to the prospective customer as featured results. The one or more best or optimum option subsets are thus subsets of a larger set of travel options classified by category, which in turn are subsets of a larger set of all possible travel options meeting the search criteria. The travel options comprising these best option subsets are selected by applying logic to classify the travel options according to a category and then to rank the travel options within a category for the presentation of the top N ranked travel options in the category. By limiting the choices displayed to the customer to a subset of all possible travel options, an improved display with higher value to the client is achieved.

To this end, examples of the client query results display processing and displaying approach are directed to selecting a subset of a larger set of travel options as featured results returned by a database search engine so that customers of a travel service provider are not overwhelmed with excessive choices. These featured results may then be presented by the travel service provider to its customer in a webpage visible on a display along with an invitation to make a particular selection. The processing of search results removes less desirable travel options based upon suitable logic to eliminate less relevant products or options. One approach is to use a single parameter, such as a ticket price, travel time, departure time, or arrival time, for processing of the search results. However, the operation of simple parameters such as these may be too transparent to the customer, and may fail to deliver sufficient perceived value. By using a combination of categorizing and ranking travel options to be presented to the customer, the operation of a search results selection formula or algorithm may be made less transparent. In addition, selection algorithm performance on future search results may be improved by "auto learning" based on a variety of data associated with past customer behavior stored in databases accessible by the system. To further improve customer confidence in the travel options presented, embodiments may also qualify each proposal with a "credibility stamp" that may provide a tangible source of confidence to the customer.

Examples of the search results processing and display system may include a search engine at the CRS that considers past customer choices when scoring or ranking the relevance of travel option search results. In the specific context of air travel, flight search results may be obtained from publicly and privately negotiated rate databases and then ranked, at least in part, based on previous sales data, booking data, ticketing data, and demand data for similar flights. For example, customers or travel agents who searched for flights between a particular pair of originating and destination locations may have demonstrated selection patterns that provide insight regarding which flights are most likely to be of interest and relevant to a current system user seeking to book a flight. This history of which flights are more likely (i.e., have a relatively high probability) to be selected by a customer requesting a search with a similar set of search parameters may thereby be used to sort the current flight search results and narrow down the number of selections to be presented to the customer. Flights that are historically less likely (i.e., have a relatively low probability) to be selected by a customer may be filtered out of the displayed results to reduce visual clutter and provide the customer with a more manageable set of travel option selections as featured results.

Other parameters may also be utilized by the search results selection system of the CRS in determining which travel options should be presented to the customer by the travel service provider. By way of example, for a given origin, destination, and travel date, the search results selection system may select featured results to display from one or more categories of travel options. These may include displaying the most popular flight itinerary(ies) as the featured results, the overall fastest or shortest duration flight itinerary(ies) as the featured results, flight itinerary(ies) that are part of an exclusive offer which the travel service provider has negotiated with one or more selected airlines as the featured results, the cheapest available flight(s) or travel solution(s) overall as the featured results, the last or most recently booked flight itinerary(ies) across all distributers for the requested travel date, origin, and destination as the featured results, and/or a sponsored flight itinerary(ies) that represents a specific recommendation by the travel service provider as the featured results.

In an alternative example, a qualification flag or sense-of-urgency indicator is communicated from the CRS to the travel service provider for display to the customer as assistance in their decision making. The sense-of-urgency indicator is representative of the popularity of one or more of the flight itineraries in the featured results. For example, the CRS causes an indication of a number of people who have booked a particular flight itinerary to be communicated as a sense-of-urgency indicator to the travel service provider for display to the customer. Alternatively, the CRS causes a time stamp indicating when the latest ticket was booked for a flight or a similar flight to be communicated as a sense-of-urgency indicator to the travel service provider for display to the customer. Alternatively, the CRS may cause a warning indication of how many seats are currently available for a flight itinerary to be communicated as a sense-of-urgency indicator to the travel service provider for display to the customer. The CRS may also cause multiple sense-of-urgency indicators to be simultaneously returned for display to the customer.

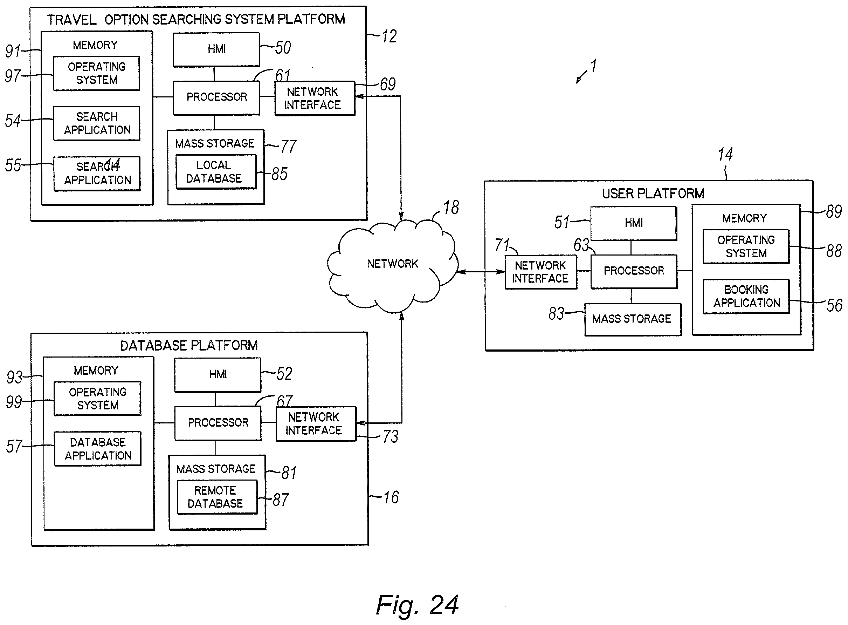

With reference to Figure 24 and in accordance with an embodiment of the invention, an exemplary operational environment for the search results selection system, which may correspond to the database system 1 of Figure 1, includes a travel option searching system platform in the form of a CRS 12, a user platform 14, and at least one database platform 16. The hardware platforms 12, 14, 16 are in operative communication with each other via a network 18. Hardware platform 12 may include a processor 61, memory 91, a mass storage device 77, a network interface 69, and a Human-Machine Interface (HMI) 50. Hardware platform 14 may include a processor 63, memory 89, a mass storage device 83, a network interface 71, and a HMI 51. Hardware platform 16 may include a processor 67, memory 93, a mass storage device 81, a network interface 73, and a HMI 52.

Each of the processors 61, 63, 67 may include one or more processing circuits selected from microprocessors, micro-controllers, digital signal processors, microcomputers, central processing units, field programmable gate arrays, programmable logic devices, state machines, logic circuits, analog circuits, digital circuits, and/or any other devices that manipulate signals (analog and/or digital) based on operational instructions that are stored in the associated platform memory 89, 91, 93. Each of the memories 89, 91, 93 may comprise a single memory device or a plurality of memory devices including, but not limited to, read-only memory (ROM), random access memory (RAM), volatile memory, non-volatile memory, static random access memory (SRAM), dynamic random access memory (DRAM), flash memory, cache memory, and/or any other device capable of storing digital information. Each of the mass storage devices 77, 81, 83 may comprise a single mass storage device or a plurality of mass storage devices including, but not limited to, hard drives, optical drives, tape drives, non-volatile solid state devices and/or any other device capable of storing data, such as a database structure 85, 87.

Network interfaces 69, 71, 73 may employ one or more suitable communication protocols for communicating over the network 18, such as User Datagram Protocol/Internet Protocol (UDP/IP), and/or Transmission Control Protocol/Internet Protocol (TCP/IP). The network interfaces 69, 71, 73 may connect to the network 18 via a hardwired link, such as an IEEE 802.3 (Ethernet) link, a wireless link using a wireless network protocol, such as an 802.11 (Wi-Fi) link, or any other suitable link that allows the hardware platforms 12, 14, 16 to interface with the network 18. Network 18 may include a plurality of interconnected networks, such as one or more Local Access Networks (LANs), Wide Access Networks (WANs), and/or public networks, such as the Internet. The Internet is a global system of interconnected computer networks. The World Wide Web is a system of interlinked hypertext documents accessed via the Internet and, more specifically, is a collection of text documents and other resources, linked by hyperlinks and uniform resource locators (URLs), usually accessed by web browsers from web servers. With a web browser, the user/customer can view web pages generated by the CRS, which may be an application hosted on hardware platform 14, that may contain text, images, videos, and other multimedia, and navigate between them via hyperlinks.

Each of the processors 61, 63, 67 may operate under the control of a respective operating system 88, 97, 99, which may reside in the corresponding memory 89, 91, 93 of the respective platform 14, 16, 18. The operating system 88, 97, 99 may manage the computer resources of respective platform 14, 16, 18 so that computer program code embodied as one or more computer software applications 54-57 residing in memory 89, 91, 93 may have instructions executed by the processor 61, 63, 67. An HMI 50-52 may be operatively coupled to the processor 61, 63, 67 of the respective hardware platform 12, 14, 16 in a known manner. The HMI 50-52 may include output devices, such as alphanumeric displays, a touch screen, and other visual indicators, and input devices and controls, such as an alphanumeric keyboard, a pointing device, keypads, pushbuttons, control knobs, etc., capable of accepting commands or input from an operator and transmitting the entered input to the processor 61, 63, 67.

With reference to Figure 25, a travel option searching system (TOSS) 60 for the CRS 14 includes an instance of the search platform 3 (Massive Search Platform, MSP), and an instance of the computation platform 2 (Massive Computation Platform, MCP). The functions shown in Figure 25 that comprise the TOSS 60 may be provided by one or more search applications 54, 55 hosted by the TOSS platform 12, and/or may be provided by applications running on separate hardware platforms connected through a network or other communication medium. The computation platform 2 includes a cache manager module 68, a pricing engine plug-in 65, and a fair search engine plug-in 66. The cache manager module 68 manages re-computation orders coming in from the search platform 3 and plug-ins 65, 66, and returns computed database query results to the search platform 3.

As described in detail above in connection with the computation platform 2, it is the main function of the computation platform to compute numerous prices within a given time frame and provide these computation results to the search platform 3. In the example of Figure 25, the plug-ins 65, 66 are designed to serve these purposes and to implement the functions having been described in detail above. For reasons of simplicity, the massive masters 20 and massive workers 22 are not depicted by Figure 25. The computation platform 2 may thereby offer full scalability that allows the search platform 3 to access an arbitrarily large amount of data and/or perform an arbitrarily large number of price calculations. The fair search engine plug-in 66 may run continuously so that the lowest fare travel options are constantly updated by the computation platform 2 and refreshed in the search platform 3. Additionally or alternatively, the smart approach to update the pre-computed database query results of the re-computation trigger platform 4 may be employed (not depicted by Figure 25 for reasons of simplicity). The travel option data in the search platform 3 may thereby reflect real-time or near real-time fare pricing. For search requests including a unique itinerary requiring data that has not been pre-computed at all or recently updated among the lowest fare travel options, the pricing engine plug-in 65 may compute a unique price for the unique itinerary upon internal request of the cache manager 68. The uniquely priced itinerary may then be provided to the search platform 3 by the cache manager module 68.

Both the pricing engine plug-in 65 and the fair search engine plug-in 66 may be in operative communication with one or more databases that contain data relating to airline flights, such as a Travel Agency Originating Commission (TAOC) fee database 70, a flight fares database 72, a flight schedules database 74, and a flight availability database 75. The TAOC fee database 70 may include information regarding ancillary services filled by an online travel agency having a pre-existing relationship with the TOSS operator. The fares database 72 may include published and negotiated fares, e.g., published airline fares and fares negotiated by a travel agency. Similarly, the schedules database 74 may include airline flight schedules, and the flight availability database may include information regarding the availability of flights and/or open seats on the flights. Each of the databases 70, 72, 74, 75 may include a database containing proprietary data that is accessible within the TOSS 60, but that is not reachable from outside the system 60. Each of the databases 70, 72, 74, 75 may also include data available from publically accessible databases. Two or more of the databases 70, 72, 74, 75 may be combined into a single database, such as the schedules database 74 and the flight availability database 75.

To retrieve travel option data, one or more of the fare search engine plug-in 66 (which typically processes numerous itineraries at once) and/or pricing engine 65 (which typically processes a single itinerary at a time) queries the databases 70, 72, 74, 75, performs a low fare search process and delivers the search results. Those results are then sent to the search platform 3. In an example of the search results processing and display sub-system, the plug-ins 65, 66 of the computation platform 2 return results that include price, availability, and schedule data for flights matching the search terms in the search request. Typical search terms may include various different itineraries (e.g., origin/destination locations and dates for travel).

To facilitate determining the popularity of a travel option, last booking date, and/or last timestamp indexing functions, the cache manager 68 may be in operative communication with a Last Booking Date/Timestamp (LBDT) database 80. The LBDT database 80 may maintain, and/or have access to, one or more proprietary databases containing historical data relating to the travel options booked by system users. In the example shown in Figure 25, the LBDT database 80 includes a booking information database 82, a proprietary ticketing database 84, and a market intelligence database 86. The booking information database 82 may include all Passenger Name Record (PNR) data for travel bookings performed by users via the TOSS 60. The proprietary ticketing information database 84 may include data relating to all tickets sold via the travel booking system. The data in the proprietary booking information and ticketing information databases 82, 84 may be data captured by the TOSS 60 as tickets are booked. This data may therefore be data that is not directly available to systems outside the TOSS 60. The market intelligence information database 86 may include an inventory of all globally accessible PNR databases, which may be operated, for example, by travel agencies, airlines, and/or other travel booking systems.

In the example of Figure 25, the search platform 3 includes a Travel Solutions Smart Index (TSSI) 76 that indexes and/or categorizes search results obtained from the databases 70, 72, 74, 75, 80 according to one or more formulas, algorithms, rules, and/or criteria. The TSSI may correspond to the In memory storage 301 of the search platform 3 as described above in connection with Figure 11. Search results may be provided to the TSSI 76 by the cache manager 68 in the manner described in detail above. The cache manager 68 manages the database query results returned by the pricing engine and fare search engine plug-ins 65, 66. The cache manager 68 regularly refreshes data in the search platform 3 from the LBDT database 80 so that as booking, ticketing, and market intelligence data is updated, the data in the TSSI 76 is kept current in real-time or near real-time. The categorized search results may be further sorted or ranked by the TSSI 76 using a ranking- such as historical travel booking data obtained from one or more databases or sub-databases - to facilitate limiting displayed results to a manageable number. For example, the TSSI 76 may sort the results for a particular search based on a selected ranking parameter. A featured results transaction 79 may use this indexing or ranking to display to one or more selected results in each of one or more categories, with the selected results representing the "best" choices available for a given primary search category. The rankings may be re-calculated and/or refreshed at regular intervals so that search results are ranked according to the latest booking and ticketing data available. By providing a local database - e.g. in form of the In memory storage 301 - within the TOSS 60 that hosts and indexes search result data, the TSSI 76 may provide end users with faster response times to search requests. The perceived performance of the system may thereby be improved as compared to systems that must retrieve travel option information from external databases each time a search request is submitted by a system user.

Travel service providers may interact with the TSSI 76 through a website to search for travel options in response to an inquiry from a customer. Generally, a website is a collection of interconnected web pages that are typically located on a common server, and prepared and maintained as a collection of information. In response to a query from a travel service provider, a featured result transaction may be provided to a display function 78, which in turn provides the featured results in a readable format on a display to the requesting entity. The requesting entity may be a travel agency website, the travel option booking application 56, or any other application that a system user or customer might use to search for and book travel options. The display function 78 may also provide an Application Programming Interface (API) that is used as an interface to the TOSS 60 by external resources or applications, such as the travel option booking application 56, a web server application (not shown), or any other suitable application.

In developing search results selection, indexing, and/or ranking formulas, all possible sources and types of data may be considered in the preliminary analysis of historical travel option selection data. Based on this analysis, travel option characteristics may be selected based on their effect on, or correlation to, customer selections. Travel option data analyzed may include, but is not limited to, ticket price, travel time, airline, and the number of times that the travel option has been booked, to name but a few parameters. By way of example, the number of times that a travel option has been booked in the past may be used to define a category of travel option classification, as well as to rank search results within this category or another different category. The system may then define all possible criteria that could distinguish the booked option or options from other alternative travel options that were not booked or that were booked at a lower selection rate. For example, flight booking rates may be correlated to flight duration, departure time, return time, number of stops, total price, airline, originating airport, destination airport, departure day of the week, return day of the week, departure date, return date, etc. Each one of these travel option characteristics may be combined to determine a composite value that correlates to the frequency with which the corresponding travel option is selected. This value, in turn, may be one of several used to select the featured results of a travel option search.

The categories used to distinguish booked travel options are not limited to any of the aforementioned lists, and may include any criterion that characterizes a travel option. The system may analyze the data set, and select relevant categories based on the analysis. This analysis may take into consideration the different dimensions of the data set, and balance the rating depending on the amount of data available for each data point. If there is not enough data for a given data point, the process may abstract or interpolate the variable until the variable is represented by a significant amount of data. The selected categories may be applied to search results to determine which results to present to a system user as the featured results. Influencing category combinations may also be grouped to provide diversity in the proposed travel option selections provided to the system user.

To this end, the categories used by the TSSI 76 to classify the database query results (pre-)computed by the computation platform 2 may include, but are not limited to, the following categories:
Fastest - The TSSI 76 may process the computed database query results from the computation platform 2 to identify a limited specified number of travel options having the shortest elapsed times from origin location to final destination location for the requested dates as a set of featured results to be included in the featured results transaction 79. Alternatively, the TSSI 76 may identify the travel option having the shortest elapsed time from origin location to final destination location for the requested dates, which may be displayed as a single featured result. As a numerical example, the limited specified number of travel options in the set of featured results may be the ten (10) fastest travel options. The elapsed time may include both flight time for an itinerary and the ground time between any connections in the itinerary. The set of featured results may be sorted for display strictly using the classification of the category (i.e., from fastest travel option to slowest travel option). Alternatively, a ranking, such as travel option cost, may be used to sort the featured results from cheapest to most costly for display. For example, the ten (10) fastest travel options in a set of featured results may be ranked for display from the cheapest travel option to the most costly travel option.

Popular - The TSSI 76 may process the computed database query results from the computation platform 2 to identify a limited specified number of travel options that are, as examples, most frequently booked or most frequently ticketed, i.e., the most popular travel options, as a set of featured results to be included in the featured results transaction 79. Alternatively, the TSSI 76 may identify the single travel option that is most frequently booked or most frequently ticketed, which may be displayed as a single featured result. This category may employ different levels of granularity for the compiled booking and ticketing data, such as tickets booked or ticketed worldwide, tickets booked or ticketed only within a predefined market, or tickets booked or ticketed only at a point of sale. These subcategories of popularity may also be combined to produce a composite popularity rating. The set of featured results may be sorted for display strictly using the classification provided by the category (i.e., from most popular travel option to least popular option), or in combination with another parameter, such as traveller-desired route, carrier, schedule, and/or cost, to qualify the featured results for display.

Exclusive - The TSSI 76 may process the computed database query results from the computation platform 2 to identify a limited specified number of travel options that include ancillary services negotiated with one or several airlines by an affiliated travel agency as a set of featured results to be included in the featured results transaction 79. Alternatively, the TSSI 76 may identify a single travel option that includes a negotiated ancillary service, which may be displayed as a single featured result. Exemplary ancillary services may include any additional service that is exclusive to the traveller such as, for example, complementary lounge access, upgraded meals, and/or seat upgrades. The affiliated travel agency may be one or more selected travel agencies that are provided access to the TOSS 60. The featured results in this category may be ordered for display based on the lowest cost recommendation matching the airline's fare attached to these ancillary services - i.e., based on total cost of the travel option and/or on the cost of the associated air fare alone.

Cheapest - The TSSI 76 may process the computed database query results from the computation platform to identify a limited specified number of cheapest travel options (e.g., the 10 cheapest travel options) among published fares and private fares negotiated between one or more airlines and participating travel agencies to be included in the featured results transaction 79. Alternatively, the featured results transaction 79 may be populated with the single cheapest travel option, which may be displayed to the user as a single featured result. In case of multiple fares that are priced equally, the options may be ordered for display based upon popularity, such as described with respect to the "Popular" category described above.

Last Booked - The TSSI 76 may process the computed database query results from the computation platform 2 to identify a limited specified number of travel options that were most recently booked across all distributors (e.g., the 10 most recently booked travel options) in the featured results transaction 79. Alternatively, the TSSI 76 may identify the single most recent (e.g., latest) travel option that was booked, which may be displayed as a single featured result. If the specific customer has booked a trip having the same or similar characteristics in the past - e.g., between the same originating and destination locations - the "last booked" option may also display flight options last chosen by the specific customer or may be biased by the specific customer's past identical or similar bookings.

Sponsored - The TSSI 76 may process the computed database query results from the computation platform 2 to identify a limited specified number of travel options (e.g., 10 travel options) selected by a sponsoring entity, such as a travel agency, to include in the featured results transaction 79. Alternatively, the TSSI 76 may identify a single sponsored travel option, which may be displayed as a single featured result. These travel options may include a particular routing, carrier, or fare, and may be based on a negotiated deal between the sponsoring entity and the travel option provider, such as, for example, a higher commission paid from an airline to a travel agency.

In an example of the search results processing and display sub-system, each category of search results may be ranked according to popularity ranking. That is, a subset of a category of search, such as specific number N of top ranked results within the category, are sorted according to a ranking, such as popularity.

A top result or several top results from this ranked subset may then be displayed to the customer as featured results. In this way, the number of choices presented to the customer may be limited to a manageable number. This restriction may reduce anxiety in the customer caused by an overwhelming number of choices, and thereby facilitate quicker, less stressful decision making. In addition to the number of past customers who have booked a particular flight, the LBDT database 80 may also include information regarding the time the last ticket for a particular itinerary was booked, the number of remaining seats for a particular ticketing option, and popularity related to a specific criteria, such as the number of travellers who booked a ticket or were ticketed for a certain date, time, price, destination, etc. Featured results may be displayed as a map showing the most popular destinations based on a time of year (e.g., where people are booking flights in March); an originating location (e.g., where are people flying to from Chicago); price (what is the cheapest destination), or any other travel parameter.

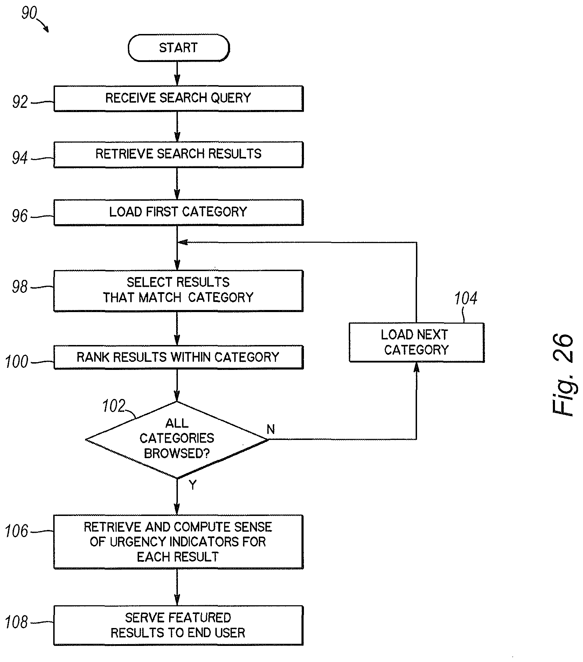

Referring now to Figure 26, a flow chart 90 illustrates a featured results selection algorithm in accordance with an embodiment of the invention. In block 92, the TOSS 60 receives a search query. The search query will typically originate from an application hosted on the user platform 14, such as the booking application 56. However, the search query may also originate from an application hosted on travel option searching system platform 12, such as a web server application (not shown), or an application on some other suitable platform that has been provided access to the TOSS 60, such as a third party ticket reservation system. For example, the search query may be issued by an application running on a travel agency web server or travel option booking system in response to a customer requesting travel options between an origination location and a destination location on a desired travel date.

In block 94, the TOSS 60 retrieves search results from the TSSI 76 database. In cases where the search query includes terms that do not match travel options indexed in the TSSI 76, the TOSS 60 may search additional databases 70, 72, 74, 75, 80 via the computation platform 2 and provide updated data to the TSSI 76. These search results may include all travel options that satisfy the search parameters, and may number in the thousands. The search results may be indexed by the TSSI 76 into categories as described above.

In block 96, the TOSS 60 loads a first category. The first category may be classified by one of the categories discussed above, such as the travel options having the lowest elapsed times, popularity, the presence of exclusive offers, cost, last booked, and/or sponsorship. In block 98, the TOSS 60 selects search results that match the loaded category and proceeds to block 100. In block 100, the selected search results are ranked or sorted within the category based on a ranking. The ranking may be, for example, based on the popularity of the preselected search results, which may be determined by the TSSI 76 as discussed previously. The ranking may also be based on correlations between the parameters of the travel option and the frequency with which the corresponding travel option has historically been booked or ticketed. The correlated combinations may be based strictly on correlations between booking rates and the travel option parameters. To provide a set of featured results, a given number N of the top ranked results within the category are selected for presentation to the search query requester. This given number is typically less than the total number of results within the category and may be a single top result.

In block 102, the TOSS 60 determines if all the categories of search results have been browsed. If not ("NO" branch of decision block 102), the TOSS 60 proceeds to block 104 and loads the next category of search results. The TOSS 60 then returns to block 98 to repeat the featured result selection process using the newly loaded category. If all the search result categories have been browsed for featured results ("YES" branch of decision block 103), the TOSS 60 proceeds to block 106. In block 106, the travel options selected for presentation to the requesting party are retrieved and urgency indicators computed for each featured result or group of results within a category. The TOSS 60 then proceeds to block 108, where the featured results are provided to the requesting party via the display function 78.

The search result selection process may thereby apply one or more formulas to a given search request, with each formula corresponding to a particular category, by matching the search parameters to each formula's data set dimensions. The search result selection process may then rank the list of results produced by each formula and determine the top N results with the category. Each formula may correspond to a qualification category, and each proposed result may be qualified accordingly.

Each category may be associated with a qualification flag that can be returned together with the result. Other sense-of-urgency flags might be also returned with each featured result. Result formulas may have both qualitative and quantitative flags. In the case of a qualitative formula, a qualification flag may be fixed to identify a particular qualitative criterion associated with the formula. For example, the flag may identify the formula's category as being the cheapest or fastest available travel option. In the case of a quantitative formula, the qualification flag may include a numerical parameter. For example, the qualification flag may be based upon the last booking time, such as the travel option was last booked X minutes ago, as an urgency feature associated with one or more of the travel options in the featured results. As another example, the qualification flag may be based upon the frequency with which each travel option in the feature results has been booked in the past, and supplied with the featured results as an urgency feature. As yet another example, the qualification flag may indicate the number of seats remaining in inventory for each travel option in the feature results as an urgency feature supplied with the featured results. A given result may also belong to multiple categories. For example, a specific flight may be both the cheapest and fastest travel option for a desired origination and destination pair, in which case the flight would be indexed as belonging in both categories. The search result qualification process may flag each result and lookup the numerical value in case of quantitative result, and the response may include a results selection including the respective qualification flags.

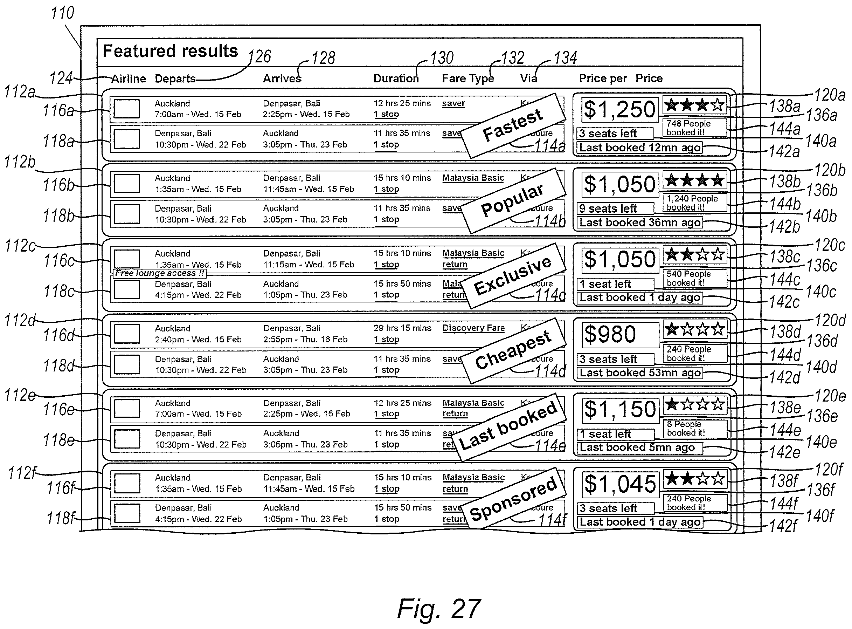

Referring now to Figure 27, an exemplary featured results page 110, such as may be displayed by a browser application, provides the featured results in travel option search result category windows 112a-112f. Although the search results page 110 as illustrated in Figure. 27 includes six search result category windows 112a-112f, embodiments of the invention may include any number of category windows, and the invention is not limited to a particular number of category windows. The number of featured results displayed in each category is also not limited to any particular number, and may be, for example, a single featured result. By way of another example of how featured results may be displayed, in response to a user selecting or hovering over a particular category, the system may expand the category window 112a-112f to show additional featured results for that category. Thus, persons having ordinary skill in the art will understand that the featured results page illustrated in Figure 27 represents only one exemplary way to display featured results, and embodiments of the invention are not limited to the display configuration shown.

Each category window 112a-112f may include a category identifier flag 114a-114f that identifies the search results classification, one or more featured travel option segment windows 116a-116f, 118a-118f, and a price/availability information window 120a-120f. As shown in Figure 27, the category windows 112a-112f include a travel option that includes a departure segment 116a-116f and a return segment 118a-118f, although other numbers of travel options and/or segments may be displayed within the category windows 112a-112f. For example, embodiments of the invention may display a travel option for a one-way trip having one or more segments, or multiple travel options each having one or more segments.

The featured travel option segment windows 116a-116f, 118a-118f include information regarding the corresponding travel option, such as airline carrier 124, departing location 126, arriving location 128, duration 130, fare type 132, and planned layover locations 134.

Each price/availability information window 120a-120f may include a travel option price 136a-136f, a star ranking 138a-138f that is based on customer feedback regarding the travel option, and one or more urgency features. The urgency features may include a flag indicating the number of seats available 140a-140f, a flag indicating the time the last seat was booked 142a-142f, and/or a flag indicating how many people have booked the travel option 144a-144f.
In operation, a customer who wishes to search for and/or book a flight may log into a travel agency website using a web browser in a known manner. The travel agency website may be hosted by the user platform 14, which may include one or more applications, such as the booking application 56 and/or a web server application (not shown). The customer may enter in desired originating and destination locations and travel times via the web browser. The booking application 56 may receive the entered information and issue a search request to the TOSS 60 based thereon. In an alternative embodiment of the invention, the customer may log into a web server application or booking application hosted by the TOSS platform 12 or another platform owned by the operator of the TOSS 60. In response to receiving the travel option search parameters, the TOSS 60 may search the databases for travel options matching the entered information. The search results may then be ranked as previously described with respect to Figure 25 and 26. The TOSS 60 may then provide the featured results to the requesting application in one or more primary search ranking categories. The requesting application may then display the results as featured results page as described with respect to Figure 27.

In summary, the way of processing, returning and displaying pre-computed database query results can be characterized by the following points:
1. A method comprising:
   retrieving a plurality of travel options from a travel option database based on search terms in a search query;
   classifying the travel options according to at least one category;
   ranking the travel options for each category; and
   providing at least one of the ranked travel options for each category to display to a customer.
2. The method of point 1, further comprising:
   determining a sense-of-urgency indicator for the at least one travel option; and
   providing the sense-of-urgency indicator for display in association with the at least one of the ranked travel options.
3. The method of point 2, wherein the sense-of-urgency indicator comprises a qualitative flag.
4. The method of point 2, wherein the urgency indicator comprises a quantitative flag including a numerical value.
5. The method of point 1, wherein the category is an elapsed time for each of the travel options, a popularity of each of the travel options, a presence of an exclusive offer associated with each of the travel options, a cost of each of the travel options, a time at which each of the travel options was most-recently booked, or a sponsorship associated with each of the travel options.
6. The method of point 1, wherein the travel options are ranked based on the elapsed time for each of the travel options, the popularity of each of the travel options, the cost of each of the travel options, or the time at which each of the travel options was most-recently booked.
7. A computer program product, comprising:
   a non-transitory computer readable storage medium; and
   program instructions stored on the computer readable storage medium that, when executed by a processor, cause the processor to execute the method of point 1.
8. A computing device, comprising:
   a processor; and
   a memory including instructions that, when executed by the processor, cause the computing device to execute the method of point 1.
9 Systems, methods, and computer program products as substantially described and shown herein.

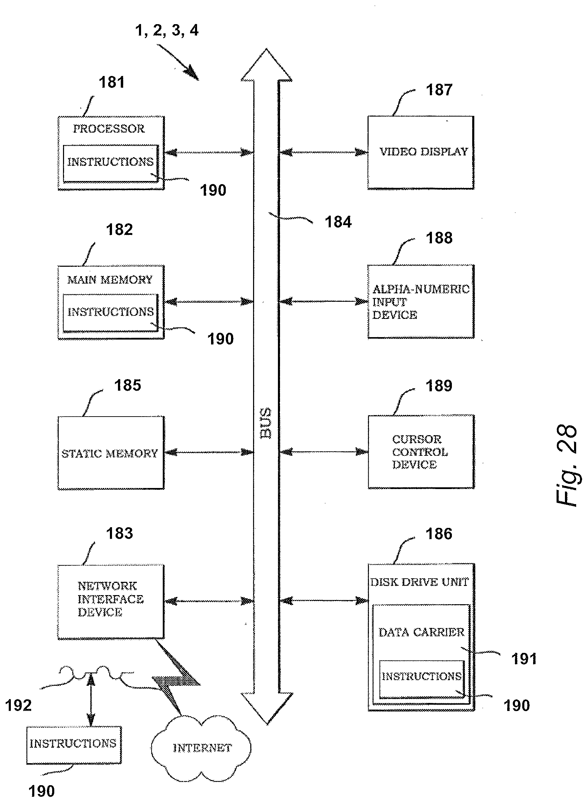

Finally, Figure 28 is a diagrammatic representation of a computer system which provides the functionality of the computation platform 2, the search platform 3 and/or the re-computation trigger platform 4 as shown by Figure 1, or at least part of these modules (such as, for example, a massive master 20 or a massive worker 22) or the overall system (if all platforms are integrated into one single architectural entity). Within the computer system, a set of instructions, to cause the computer system to perform any of the methodologies discussed herein, may be executed. The computer system includes a processor 181, a main memory 182 and a network interface device 183, which communicate with each other via a bus 184. Optionally, it may further include a static memory 185 and a disk-drive unit 186. A video display 187, an alpha-numeric input device 188 and a cursor control device 189 may form a distribution list navigator user interface. The network interface device 183 connects, for example, re-computation trigger platform 4 to the computation platform 2 or the search platform 3 to the computation platform 2 etc. (if the platforms are implemented in separate hosts), the sources of statistical data needed to fill up the predictive model such as the statistics servers 9, the volatility database 10 and the initial accuracy database 11, the sources of real-time events, the Internet and/or any other network. A set of instructions (i.e. software) 190 embodying any one, or all, of the methodologies described above, resides completely, or at least partially, in or on a machine-readable medium, e.g. the main memory 182 and/or the processor 181. A machine-readable medium on which the software 190 resides may also be a non-volatile data carrier 191 (e.g. a non-removable magnetic hard disk or an optical or magnetic removable disk) which is part of disk drive unit 186. The software 190 may further be transmitted or received as a propagated signal 192 via the Internet through the network interface device 183.

It will be appreciated that alterations and modifications may be made to the above without departing from the scope of the disclosure. Naturally, in order to satisfy local and specific requirements, a person skilled in the art may apply to the solution described above many modifications and alterations.

Similar considerations apply if the program (which may be used to implement each embodiment of the disclosure) is structured in a different way, or if additional modules or functions are provided; likewise, the memory structures may be of other types, or may be replaced with equivalent entities (not necessarily consisting of physical storage media). Moreover, the proposed solution lends itself to be implemented with an equivalent method (having similar or additional steps, even in a different order). In any case, the program may take any form suitable to be used by or in connection with any data processing system, such as external or resident software, firmware, or microcode (either in object code or in source code). Moreover, the program may be provided on any computer-usable medium; the medium can be any element suitable to contain, store, communicate, propagate, or transfer the program. Examples of such medium are fixed disks (where the program can be pre-loaded), removable disks, tapes, cards, wires, fibres, wireless connections, networks, broadcast waves, and the like; for example, the medium may be of the electronic, magnetic, optical, electromagnetic, infrared, or semiconductor type.

In any case, the solution according to the present disclosure lends itself to be carried out with a hardware structure (for example, integrated in a chip of semiconductor material), or with a combination of software and hardware.

## Claims

1. A database system (1) comprising a computation platform (2) and a search platform (3), and further comprising a re-computation trigger platform (4), wherein
- the computation platform (2) is arranged to
∘ receive batch re-computation orders from the re-computation trigger platform (4), each batch re-computation order instructing the computation platform (2) to re-compute a portion of a plurality of pre-computed database query results,
∘ process a batch re-computation order by re-computing the portion of the plurality of pre-computed database query results according to a batch processing schedule within a given time frame, wherein the timeframe is indicated in the batch re-computation order or is determined autonomously by the computation platform (2) or is negotiated between the computation platform (2) and the re-computation trigger platform (4), and wherein the batch processing schedule is set up by the computation platform (2) after having analysed the batch computation order and by taking into account available computation resources at the computation platform (2),
∘ return the re-computed database query results resulting from the batch re-computation order to both, the search platform (3) and the re-computation trigger platform (4);
- the search platform (3) is arranged to
∘ maintain the plurality of pre-computed database query results in a memory (301) and
∘ to make the plurality of pre-computed database query results available to clients connected to the search platform (3); and
- the re-computation trigger platform (4) being arranged to
∘ receive information of the available computation resources at the computation platform (2),
∘ maintain control data comprising attributes of the plurality of pre-computed database query results in order to determine probabilities of the pre-computed database query results being outdated,
∘ issue the batch re-computation order to the computation platform (2) regarding the portion of the plurality of pre-computed database query results having a higher probability of being outdated than other pre-computed database query results of the plurality, the portion of the plurality of pre-computed database query results being limited by the computation resources available at the computation platform (2).

2. The database system (1) of claim 1, wherein the batch re-computation order instructs the computation platform (2) to compute at least one million database query results and within at most 24 hours.

3. The database system (1) of claim 1 or claim 2, wherein the computation platform (2) is further arranged to
- analyze and decompose the batch re-computation order into smaller computation packages relating to a subset of the portion of the plurality of pre-computed database query results;
- assign the computation packages to processing modules in order to execute computations of the computation packages;
- re-assemble results of the computation packages computations performed by the processing modules, and
- return the re-assembled results to the search platform (3) and to the re-computation trigger platform (4).

4. The database system (1) of claim 3, wherein the arrangement of the computation platform (2) to analyze and decompose the batch re-computation order includes an arrangement to
- split up the batch re-computation order into atomic computation transactions;
- identify redundant atomic computation transactions and discard them;
- group the remaining non-redundant atomic computation transactions to form the computation packages.

5. The database system (1) of claim 3 or claim 4, wherein the computation platform (2) is arranged to assign the computation packages to the processing modules according to the batch processing schedule, the batch processing schedule providing a load distribution by taking into account available computation resources of the computation modules within the given timeframe.

6. The database system (1) of any of the preceding claims comprising a plurality of search platforms (3) connected to the computation platform (2) and the re-computation trigger platform (4) is arranged to trigger re-computations of pre-computed database query results populating anyone of the plurality of search platforms (3) connected to the computation platform (2).

7. The database system (1) of any of the preceding claims, wherein the re-computation trigger platform (4) is further arranged to determine the probabilities of the pre-computed database query results being outdated depending on a probabilistic model and on the occurrence of asynchronous real-time events, wherein the probabilistic model models discrepancies between the pre-computed database query results maintained in the search platform (3) and presumed actual database query results.

8. The database system (1) of claim 7, wherein the re-computation trigger platform (4) is further arranged to
- analyse whether incoming asynchronous real-time events are represented in the probabilistic model;
- for real-time events which are not represented in the probabilistic model, issue the batch re-computation order regarding the portion of the plurality of pre-computed database query results as soon as possible;
- for real-time events which are represented in the probabilistic model, accumulate such real-time events over a certain period of time, compare the actually occurred and accumulated real-time events with their representation in the probabilistic model and, if the actually occurred accumulated real-time events deviate from their representation in the probabilistic model to a predetermined extent, issue the batch re-computation order with respect to portion of the plurality of pre-computed database query results as soon as possible.

9. A method for re-computing pre-computed database query results, comprising:
- a re-computation trigger platform (4) receiving information of available computation resources at a computation platform (2) and maintaining control data comprising attributes of a plurality of pre-computed database query results maintained at a search platform (3) in order to determine probabilities of the pre-computed database query results being outdated,
- issuing, by the re-computation trigger platform (4), a batch re-computation order to the computation platform (2) regarding a portion of the plurality of pre-computed database query results having a higher probability of being outdated than other pre-computed database query results of the plurality, the portion of the plurality of pre-computed database query results being limited by the computation resources available at the computation platform (2),
- the computation platform (2) receiving the batch re-computation order from the re-computation trigger platform (4), the batch re-computation order instructing the computation platform to compute the portion of the plurality of pre-computed database query results,
- the computation platform (2) processing the batch re-computation order by computing the portion of the plurality of pre-computed database query results according to a batch processing schedule within a given time frame, wherein the time frame is indicated in the batch re-computation order or is determined autonomously by the computation platform (2) or is negotiated between the computation platform (2) and the re-computation trigger platform (4), and wherein the batch processing schedule is set up by the computation platform (2) after having analysed the batch computation order and by taking into account available computation resources at the computation platform (2),
- the computation platform (2) returning the re-computed database query results resulting from the batch re-computation order to both, the search platform (3) and the re-computation trigger platform (4);
- the search platform (3) including the re-computed database query results received from the computation platform (3) in a memory (301); and
- the search platform (3) making the re-computed database query results available to clients connected to the search platform (3).

10. The method of claim 9, further comprising the computation platform (2)
- analyzing and decomposing the batch re-computation order into smaller computation packages relating to a subset of the plurality of pre-computed database query results;
- assigning the computation packages to processing modules in order to execute computations of the computation packages;
- re-assembling results of the computation packages computations performed by the processing modules, and
- returning the re-assembled results to the search platform (3) and to the re-computation trigger platform (4).

11. The method of claim 10, wherein the computation platform (2) analyzing and decomposing the batch re-computation order further includes
- splitting up the batch re-computation order into atomic computation transactions;
- identifying redundant atomic computation transactions and discard them; and
- grouping the remaining non-redundant atomic computation transactions to form the computation packages.

12. The method of claim 10 or claim 11, wherein the computation platform (2) further assigns the computation packages to the processing modules according to the batch processing schedule, the batch processing schedule providing a load distribution by taking into account available computation resources of the computation modules within the given timeframe.

13. The method of any of claims 9 to 12, wherein the re-computation trigger platform (4) further determines the probabilities of the pre-computed database query results being outdated depending on a probabilistic model and on the occurrence of asynchronous real-time events, wherein the probabilistic model models discrepancies between the pre-computed database query results maintained in the search platform (3) and presumed actual database query results.

14. The method of claim 13, further comprising the re-computation trigger platform (4)
- analysing whether incoming asynchronous real-time events are represented in the probabilistic model;
- for real-time events which are not represented in the probabilistic model, issuing re-computation orders regarding the portion of the plurality of pre-computed database query results as soon as possible;
- for real-time events which are represented in the probabilistic model, accumulating such real-time events over a certain period of time, comparing the actually occurred and accumulated real-time events with their representation in the probabilistic model and, if the actually occurred accumulated real-time events deviate from their representation in the probabilistic model to a predetermined extent, issuing a batch re-computation order with respect to the portion of the plurality of pre-computed database query results as soon as possible.

15. A non-transitory computer readable storage medium having computer program instructions stored therein, which when executed on a computer system
are adapted to implement the arrangements of the computation platform (2), the search platform (3) and the re-computation trigger platform (4) of any one of claims 1 to 8.

## Patentansprüche

1. Datenbanksystem (1), umfassend eine Berechnungsplattform (2) und eine Suchplattform (3), und ferner umfassend eine Neuberechnungsauslöseplattform (4), wobei
- die Berechnungsplattform (2) dazu eingerichtet ist,
∘ Stapelneuberechnungsaufträge von der Neuberechnungsauslöseplattform (4) zu empfangen, wobei jeder Stapelneuberechnungsauftrag die Berechnungsplattform (2) dazu anweist, einen Teil einer Mehrzahl von vorberechneten Datenbankabfrageergebnissen neu zu berechnen,
∘ einen Stapelneuberechnungsauftrag durch Neuberechnen des Teils der Mehrzahl von vorberechneten Datenbankabfrageergebnissen in Übereinstimmung mit einem Stapelverarbeitungsplan innerhalb eines gegebenen Zeitrahmens zu verarbeiten, wobei der Zeitrahmen in dem Stapelneuberechnungsauftrag angegeben ist oder selbständig durch die Berechnungsplattform (2) bestimmt ist oder zwischen der Berechnungsplattform (2) und der Neuberechnungsauslöseplattform (4) ausgehandelt ist, und wobei der Stapelverarbeitungsplan von der Berechnungsplattform (2) nach Analysieren des Stapelberechnungsauftrags und unter Berücksichtigung verfügbarer Berechnungsressourcen an der Berechnungsplattform (2) festgelegt ist,
∘ die neuberechneten Datenbankabfrageergebnisse, die sich aus dem Stapelneuberechnungsauftrag ergeben, sowohl an die Suchplattform (3) als auch an die Neuberechnungsauslöseplattform (4) zurückzugeben;
- die Suchplattform (3) dazu eingerichtet ist,
∘ die Mehrzahl von vorberechneten Datenbankabfrageergebnissen in einem Speicher (301) zu halten und
∘ die Mehrzahl von vorberechneten Datenbankabfrageergebnissen für Clients, die mit der Suchplattform (3) verbunden sind, verfügbar zu machen; und
- die Neuberechnungsauslöseplattform (4) dazu eingerichtet ist,
∘ Informationen zu den verfügbaren Berechnungsressourcen an der Berechnungsplattform (2) zu empfangen,
∘ Steuerdaten zu halten, die Attribute der Mehrzahl von vorberechneten Datenbankabfrageergebnissen umfassen, um Wahrscheinlichkeiten, dass die vorberechneten Datenbankabfrageergebnisse veraltet sind, zu bestimmen,
∘ den Stapelneuberechnungsauftrag an die Berechnungsplattform (2) zu erteilen, der den Teil der Mehrzahl von vorberechneten Datenbankabfrageergebnissen betrifft, welche eine höhere Wahrscheinlichkeit, dass sie verwaltet sind, als andere vorberechnete Datenbankabfrageergebnisse der Mehrzahl aufweisen, wobei der Teil der Mehrzahl von vorberechneten Datenbankabfrageergebnissen durch die an der Berechnungsplattform (2) verfügbaren Berechnungsressourcen beschränkt ist.

2. Datenbanksystem (1) nach Anspruch 1, wobei der Stapelneuberechnungsauftrag die Berechnungsplattform (2) dazu anweist, wenigstens eine Million Datenbankabfrageergebnisse und innerhalb von höchstens 24 Stunden zu berechnen.

3. Datenbanksystem (1) nach Anspruch 1 oder Anspruch 2, wobei die Berechnungsplattform (2) ferner dazu eingerichtet ist,
- den Stapelneuberechnungsauftrag zu analysieren und in kleinere Berechnungspakete zu zerlegen, die eine Teilmenge des Teils der Mehrzahl von vorberechneten Datenbankabfrageergebnissen betreffen;
- die Berechnungspakete Verarbeitungsmodulen zuzuweisen, um Berechnungen der Berechnungspakete durchzuführen;
- Ergebnisse der Berechnungen von Berechnungspaketen, die von den Verarbeitungsmodulen durchgeführt wurden, wieder zusammenzusetzen, und
- die wieder zusammengesetzten Ergebnisse an die Suchplattform (3) und an die Neuberechnungsauslöseplattform (4) zurückzugeben.

4. Datenbanksystem (1) nach Anspruch 3, wobei die Einrichtung der Berechnungsplattform (2) zum Analysieren und Zerlegen des Stapelneuberechnungsauftrags eine Einrichtung dazu enthält,
- den Stapelneuberechnungsauftrag in atomare Berechnungstransaktionen aufzuteilen;
- redundante, atomare Berechnungstransaktionen zu identifizieren und diese zu verwerfen;
- die verbleibenden nicht-redundanten, atomaren Berechnungstransaktionen zu gruppieren, um die Berechnungspakete zu bilden.

5. Datenbanksystem (1) nach Anspruch 3 oder Anspruch 4, wobei die Berechnungsplattform (2) dazu eingerichtet ist, die Berechnungspakete den Verarbeitungsmodulen in Übereinstimmung mit dem Stapelverarbeitungsplan zuzuweisen, wobei der Stapelverarbeitungsplan eine Lastverteilung unter Berücksichtigung verfügbarer Berechnungsressourcen der Berechnungsmodule innerhalb des gegebenen Zeitrahmens vorsieht.

6. Datenbanksystem (1) nach einem der vorhergehenden Ansprüche, umfassend eine Mehrzahl von Suchplattformen (3), die mit der Berechnungsplattform (2) verbunden sind, und wobei die Neuberechnungsauslöseplattform (4) dazu eingerichtet ist, Neuberechnungen von vorberechneten Datenbankabfrageergebnissen auszulösen, die jede der Mehrzahl von mit der Berechnungsplattform (2) verbundenen Suchplattformen (3) füllen.

7. Datenbanksystem (1) nach einem der vorhergehenden Ansprüche, wobei die Neuberechnungsauslöseplattform (4) ferner dazu eingerichtet ist, die Wahrscheinlichkeiten, dass die vorberechneten Datenbankabfrageergebnisse veraltet sind, in Abhängigkeit von einem Wahrscheinlichkeitsmodell und dem Auftreten asynchroner Echtzeitereignisse zu bestimmen, wobei das Wahrscheinlichkeitsmodell Diskrepanzen zwischen den in der Suchplattform (3) gehaltenen, vorberechneten Datenbankabfrageergebnissen und mutmaßlich tatsächlichen Datenbankabfrageergebnissen modelliert.

8. Datenbanksystem (1) nach Anspruch 7, wobei die Neuberechnungsauslöseplattform (4) ferner dazu eingerichtet ist,
- zu analysieren, ob eingehende asynchrone Echtzeitereignisse in dem Wahrscheinlichkeitsmodell repräsentiert sind;
- für Echtzeitereignisse, die nicht in dem Wahrscheinlichkeitsmodell repräsentiert sind, den Stapelneuberechnungsauftrag, der den Teil der Mehrzahl von vorberechneten Datenbankabfrageergebnissen betrifft, so schnell wie möglich zu erteilen;
- für Echtzeitereignisse, die in dem Wahrscheinlichkeitsmodell repräsentiert sind, solche Echtzeitereignisse über einen bestimmten Zeitraum zu akkumulieren, die tatsächlich aufgetretenen und akkumulierten Echtzeitereignisse mit ihrer Repräsentation in dem Wahrscheinlichkeitsmodell zu vergleichen und, wenn die tatsächlich aufgetretenen, akkumulierten Echtzeitereignisse von ihrer Repräsentation in dem Wahrscheinlichkeitsmodell in einem vorbestimmten Ausmaß abweichen, den Stapelneuberechnungsauftrag in Bezug auf einen Teil der Mehrzahl von vorberechneten Datenbankabfrageergebnissen so schnell wie möglich zu erteilen.

9. Verfahren zum Neuberechnen von vorberechneten Datenbankabfrageergebnissen, umfassend, dass:
- eine Neuberechnungsauslöseplattform (4) Informationen zu verfügbaren Berechnungsressourcen an einer Berechnungsplattform (2) empfängt und Steuerdaten hält, die Attribute einer Mehrzahl von vorberechneten Datenbankabfrageergebnissen umfassen, die auf einer Suchplattform (3) gehalten werden, um Wahrscheinlichkeiten, dass die vorberechneten Datenbankabfrageergebnisse veraltet sind, zu bestimmen,
- ein Stapelneuberechnungsauftrag durch die Neuberechnungsauslöseplattform (4) an die Berechnungsplattform (2) erteilt wird, der einen Teil der Mehrzahl von vorberechneten Datenbankabfrageergebnissen betrifft, welche eine höhere Wahrscheinlichkeit, dass sie veraltet sind, als andere vorberechnete Datenbankabfrageergebnisse der Mehrzahl aufweisen, wobei der Teil der Mehrzahl von vorberechneten Datenbankabfrageergebnissen durch die an der Berechnungsplattform (2) verfügbaren Berechnungsressourcen beschränkt ist,
- die Berechnungsplattform (2) den Stapelneuberechnungsauftrag von der Neuberechnungsauslöseplattform (4) empfängt, wobei der Stapelneuberechnungsauftrag die Berechnungsplattform dazu anweist, den Teil der Mehrzahl von vorberechneten Datenbankabfrageergebnissen zu berechnen,
- die Berechnungsplattform (2) den Stapelneuberechnungsauftrag durch Berechnen des Teils der Mehrzahl von vorberechneten Datenbankabfrageergebnissen in Übereinstimmung mit einem Stapelverarbeitungsplan innerhalb eines gegebenen Zeitrahmens verarbeitet, wobei der Zeitrahmen in dem Stapelneuberechnungsauftrag angegeben ist oder selbständig durch die Berechnungsplattform (2) bestimmt wird oder zwischen der Berechnungsplattform (2) und der Neuberechnungsauslöseplattform (4) ausgehandelt wird, und wobei der Stapelverarbeitungsplan von der Berechnungsplattform (2) nach Analysieren des Stapelberechnungsauftrags und unter Berücksichtigung verfügbarer Berechnungsressourcen an der Berechnungsplattform (2) festgelegt wird,
- die Berechnungsplattform (2) die neuberechneten Datenbankabfrageergebnisse, welche sich aus dem Stapelneuberechnungsauftrag ergeben, sowohl an die Suchplattform (3) als auch an die Neuberechnungsauslöseplattform (4) zurückgibt;
- die Suchplattform (3) die von der Berechnungsplattform (3) empfangenen, neuberechneten Datenbankabfrageergebnisse in einem Speicher (301) enthält; und
- die Suchplattform (3) die neuberechneten Datenbankabfrageergebnisse den Clients, die mit der Suchplattform (3) verbunden sind, verfügbar macht.

10. Verfahren nach Anspruch 9, ferner umfassend, dass die Berechnungsplattform (2)
- den Stapelneuberechnungsauftrag analysiert und in kleinere Berechnungspakete zerlegt, die eine Teilmenge der Mehrzahl von vorberechneten Datenbankabfrageergebnissen betreffen;
- die Berechnungspakete Verarbeitungsmodulen zuweist, um Berechnungen der Berechnungspakete durchzuführen;
- Ergebnisse der Berechnungen der Berechnungspakete, die von den Verarbeitungsmodulen durchgeführt wurden, wieder zusammensetzt, und
- die wieder zusammengesetzten Ergebnisse an die Suchplattform (3) und an die Neuberechnungsauslöseplattform (4) zurückgibt.

11. Verfahren nach Anspruch 10, wobei die Berechnungsplattform (2), die den Stapelneuberechnungsauftrag analysiert und zerlegt, ferner enthält
- Aufteilen des Stapelneuberechnungsauftrags in atomare Berechnungstransaktionen;
- Identifizieren redundanter, atomarer Berechnungstransaktionen und Verwerfen dieser; und
- Gruppieren der verbleibenden nicht-redundanten, atomaren Berechnungstransaktionen, um die Berechnungspakete zu bilden.

12. Verfahren nach Anspruch 10 oder Anspruch 11, wobei die Berechnungsplattform (2) ferner die Berechnungspakete den Verarbeitungsmodulen in Übereinstimmung mit dem Stapelverarbeitungsplan zuweist, wobei der Stapelverarbeitungsplan eine Lastverteilung unter Berücksichtigung verfügbarer Berechnungsressourcen der Berechnungsmodule innerhalb des gegebenen Zeitrahmens vorsieht.

13. Verfahren nach einem der Ansprüche 9 bis 12, wobei die Neuberechnungsauslöseplattform (4) ferner die Wahrscheinlichkeiten, dass die vorberechneten Datenbankabfrageereignisse veraltet sind, in Abhängigkeit von einem Wahrscheinlichkeitsmodell und dem Auftreten asynchroner Echtzeitereignisse bestimmt, wobei das Wahrscheinlichkeitsmodell Diskrepanzen zwischen den in der Suchplattform (3) gehaltenen, vorberechneten Datenbankabfrageergebnissen und mutmaßlich tatsächlichen Datenbankabfrageergebnissen modelliert.

14. Verfahren nach Anspruch 13, ferner umfassend, dass die Neuberechnungsauslöseplattform (4)
- analysiert, ob eingehende asynchrone Echtzeitereignisse im Wahrscheinlichkeitsmodell repräsentiert sind;
- für Echtzeitereignisse, die nicht in dem Wahrscheinlichkeitsmodell repräsentiert sind, den Stapelneuberechnungsauftrag, der den Teil der Mehrzahl von vorberechneten Datenbankabfrageergebnissen betrifft, so schnell wie möglich erteilt;
- für Echtzeitereignisse, die in dem Wahrscheinlichkeitsmodell repräsentiert sind, solche Echtzeitereignisse über einen bestimmten Zeitraum akkumuliert, die tatsächlich aufgetretenen und akkumulierten Echtzeitereignisse mit ihrer Repräsentation in dem Wahrscheinlichkeitsmodell vergleicht und, wenn die tatsächlich aufgetretenen, akkumulierten Echtzeitereignisse von ihrer Repräsentation in dem Wahrscheinlichkeitsmodell in einem vorbestimmten Ausmaß abweichen, einen Stapelneuberechnungsauftrag in Bezug auf den Teil der Mehrzahl von vorberechneten Datenbankabfrageergebnissen so schnell wie möglich erteilt.

15. Nichtflüchtiges, computerlesbares Speichermedium, welches darin gespeicherte Computerprogrammanweisungen aufweist, die, wenn sie auf einem Computersystem ausgeführt werden, dazu ausgelegt sind, die Einrichtungen der Berechnungsplattform (2), der Suchplattform (3) und der Neuberechnungsauslöseplattform (4) nach einem der Ansprüche 1 bis 8 zu implementieren.

## Revendications

1. Système de base de données (1) comprenant une plateforme de calcul (2) et une plateforme de recherche (3), et comprenant en outre une plateforme de déclenchement de recalcul (4), dans lequel
- la plateforme de calcul (2) est agencée pour
∘ recevoir des ordres de recalcul par lots en provenance de la plateforme de déclenchement de recalcul (4), chaque ordre de recalcul par lots donnant l'instruction à la plateforme de calcul (2) de recalculer une portion d'une pluralité de résultats d'interrogation de base de données précalculés,
∘ traiter un ordre de recalcul par lots en recalculant la portion de la pluralité de résultats d'interrogation de base de données précalculés selon un programme de traitement par lots dans un intervalle de temps donné, dans lequel l'intervalle de temps est indiqué dans l'ordre de recalcul par lots ou est déterminé de façon autonome par la plateforme de calcul (2) ou est négocié entre la plateforme de calcul (2) et la plateforme de déclenchement de recalcul (4), et dans lequel le programme de traitement par lots est établi par la plateforme de calcul (2) après avoir analysé l'ordre de calcul par lots et en prenant en compte des ressources de calcul disponibles au niveau de la plateforme de calcul (2),
∘ renvoyer les résultats d'interrogation de base de données recalculés résultant de l'ordre de recalcul par lots à la fois à la plateforme de recherche (3) et à la plateforme de déclenchement de recalcul (4) ;
- la plateforme de recherche (3) est agencée pour
∘ conserver la pluralité de résultats d'interrogation de base de données précalculés dans une mémoire (301) et
∘ rendre la pluralité de résultats d'interrogation de base de données précalculés disponibles à des clients connectés à la plateforme de recherche (3) ; et
- la plateforme de déclenchement de recalcul (4) étant agencée pour
∘ recevoir des informations des ressources de calcul disponibles au niveau de la plateforme de calcul (2),
∘ conserver des données de commande comprenant des attributs de la pluralité de résultats d'interrogation de base de données précalculés afin de déterminer des probabilités que les résultats d'interrogation de base de données précalculés soient périmés,
∘ émettre l'ordre de recalcul par lots à la plateforme de calcul (2) concernant la portion de la pluralité de résultats d'interrogation de base de données précalculés ayant une probabilité plus élevée d'être périmés que d'autres résultats d'interrogation de base de données précalculés de la pluralité, la portion de la pluralité de résultats d'interrogation de base de données précalculés étant limitée par les ressources de calcul disponibles au niveau de la plateforme de calcul (2).

2. Système de base de données (1) selon la revendication 1, dans lequel l'ordre de recalcul par lots donne l'instruction à la plateforme de calcul (2) de calculer au moins un million de résultats d'interrogation de base de données, et en moins de 24 heures maximum.

3. Système de base de données (1) selon la revendication 1 ou la revendication 2, dans lequel la plateforme de calcul (2) est en outre agencée pour
- analyser et décomposer l'ordre de recalcul par lots en paquets de calcul plus petits concernant un sous-ensemble de la portion de la pluralité de résultats d'interrogation de base de données précalculés ;
- attribuer les paquets de calcul à des modules de traitement afin d'exécuter des calculs des paquets de calcul ;
- réassembler des résultats des calculs de paquets de calcul réalisés par les modules de traitement, et
- renvoyer les résultats réassemblés à la plateforme de recherche (3) et à la plateforme de déclenchement de recalcul (4).

4. Système de base de données (1) selon la revendication 3, dans lequel l'agencement de la plateforme de calcul (2) pour analyser et décomposer l'ordre de recalcul par lots comporte un agencement pour
- diviser l'ordre de recalcul par lots en transactions de calcul atomiques ;
- identifier des transactions de calcul atomiques redondantes et les rejeter ;
- regrouper les transactions de calcul atomiques non redondantes restantes pour former les paquets de calcul.

5. Système de base de données (1) selon la revendication 3 ou la revendication 4, dans lequel la plateforme de calcul (2) est agencée pour attribuer les paquets de calcul aux modules de traitement selon le programme de traitement par lots, le programme de traitement par lots fournissant une distribution de charge en prenant en compte des ressources de calcul disponibles des modules de calcul dans l'intervalle de temps donné.

6. Système de base de données (1) selon l'une quelconque des revendications précédentes, comprenant une pluralité de plateformes de recherche (3) connectées à la plateforme de calcul (2) et la plateforme de déclenchement de recalcul (4) est agencée pour déclencher des recalculs de résultats d'interrogation de base de données précalculés remplissant l'une quelconque de la pluralité de plateformes de recherche (3) connectées à la plateforme de calcul (2).

7. Système de base de données (1) selon l'une quelconque des revendications précédentes, dans lequel la plateforme de déclenchement de recalcul (4) est en outre agencée pour déterminer les probabilités que les résultats d'interrogation de base de données précalculés soient périmés selon un modèle probabiliste et la survenue d'évènements en temps réel asynchrones, dans lequel le modèle probabiliste modélise des divergences entre les résultats d'interrogation de base de données précalculés conservés dans la plateforme de recherche (3) et des résultats d'interrogation de base de données supposés réels.

8. Système de base de données (1) selon la revendication 7, dans lequel la plateforme de déclenchement de recalcul (4) est en outre agencée pour
- analyser si des évènements en temps réel asynchrones entrants sont représentés dans le modèle probabiliste ;
- pour des évènements en temps réel qui ne sont pas représentés dans le modèle probabiliste, émettre l'ordre de recalcul par lots concernant la portion de la pluralité de résultats d'interrogation de base de données précalculés dès que possible ;
- pour des évènements en temps réel qui sont représentés dans le modèle probabiliste, accumuler de tels évènements en temps réel sur une certaine période de temps, comparer les évènements en temps réel accumulés et survenus réellement avec leur représentation dans le modèle probabiliste et, si les évènements en temps réel accumulés survenus réellement s'écartent de leur représentation dans le modèle probabiliste à un degré prédéterminé, émettre l'ordre de recalcul par lots par rapport à une portion de la pluralité de résultats d'interrogation de base de données précalculés dès que possible.

9. Méthode de recalcul de résultats d'interrogation de base de données précalculés, comprenant :
- la réception par une plateforme de déclenchement de recalcul (4) d'informations de ressources de calcul disponibles au niveau d'une plateforme de calcul (2) et la conservation de données de commande comprenant des attributs d'une pluralité de résultats d'interrogation de base de données précalculés conservés au niveau d'une plateforme de recherche (3) afin de déterminer des probabilités que les résultats d'interrogation de base de données précalculés soient périmés,
- l'émission, par la plateforme de déclenchement de recalcul (4), d'un ordre de recalcul par lots à la plateforme de calcul (2) concernant une portion de la pluralité de résultats d'interrogation de base de données précalculés ayant une probabilité plus élevée d'être périmée que d'autres résultats d'interrogation de base de données précalculés de la pluralité, la portion de la pluralité de résultats d'interrogation de base de données précalculés étant limitée par les ressources de calcul disponibles au niveau de la plateforme de calcul (2),
- la réception par la plateforme de calcul (2) de l'ordre de recalcul par lots en provenance de la plateforme de déclenchement de recalcul (4), l'ordre de recalcul par lots donnant l'instruction à la plateforme de calcul de calculer la portion de la pluralité de résultats d'interrogation de base de données précalculés,
- le traitement par la plateforme de calcul (2) de l'ordre de recalcul par lots en calculant la portion de la pluralité de résultats d'interrogation de base de données précalculés selon un programme de traitement par lots dans un intervalle de temps donné, dans laquelle l'intervalle de temps est indiqué dans l'ordre de recalcul par lots ou est déterminé de façon autonome par la plateforme de calcul (2) ou est négocié entre la plateforme de calcul (2) et la plateforme de déclenchement de recalcul (4), et dans laquelle le programme de traitement par lots est établi par la plateforme de calcul (2) après avoir analysé l'ordre de calcul par lots et en prenant en compte des ressources de calcul disponibles au niveau de la plateforme de calcul (2),
- le renvoi par la plateforme de calcul (2) des résultats d'interrogation de base de données recalculés résultant de l'ordre de recalcul par lots à la fois à la plateforme de recherche (3) et à la plateforme de déclenchement de recalcul (4) ;
- l'inclusion par la plateforme de recherche (3) des résultats d'interrogation de base de données recalculés reçus en provenance de la plateforme de recherche (3) dans une mémoire (301) ; et
- par la plateforme de recherche (3), le fait de rendre des résultats d'interrogation de base de données recalculés disponibles à des clients connectés à la plateforme de recherche (3).

10. Méthode selon la revendication 9, comprenant en outre, par la plateforme de calcul (2)
- l'analyse et la décomposition de l'ordre de recalcul par lots en paquets de calcul plus petits concernant un sous-ensemble de la pluralité de résultats d'interrogation de base de données précalculés ;
- l'attribution des paquets de calcul à des modules de traitement afin d'exécuter des calculs des paquets de calcul ;
- le réassemblage de résultats des calculs de paquets de calcul réalisés par les modules de traitement, et
- le renvoi des résultats réassemblés à la plateforme de recherche (3) et à la plateforme de déclenchement de recalcul (4).

11. Méthode selon la revendication 10, dans laquelle l'analyse et la décomposition par la plateforme de calcul (2) de l'ordre de recalcul par lots comporte en outre
- la division de l'ordre de recalcul par lots en transactions de calcul atomiques ;
- l'identification de transactions de calcul atomiques redondantes et leur rejet ; et
- le regroupement des transactions de calcul atomiques non redondantes restantes pour former les paquets de calcul.

12. Méthode selon la revendication 10 ou la revendication 11, dans laquelle la plateforme de calcul (2) attribue en outre les paquets de calcul aux modules de traitement selon le programme de traitement par lots, le programme de traitement par lots fournissant une distribution de charge en prenant en compte des ressources de calcul disponibles des modules de calcul dans l'intervalle de temps donné.

13. Méthode selon l'une quelconque des revendications 9 à 12, dans laquelle la plateforme de déclenchement de recalcul (4) détermine en outre les probabilités que les résultats d'interrogation de base de données précalculés soient périmés selon un modèle probabiliste et la survenue d'évènements en temps réel asynchrones, dans laquelle le modèle probabiliste modélise des divergences entre les résultats d'interrogation de base de données précalculés conservés dans la plateforme de recherche (3) et des résultats d'interrogation de base de données supposés réels.

14. Méthode selon la revendication 13, comprenant en outre, par la plateforme de déclenchement de recalcul (4),
- le fait d'analyser si des évènements en temps réel asynchrones entrants sont représentés dans le modèle probabiliste ;
- pour des évènements en temps réel qui ne sont pas représentés dans le modèle probabiliste, l'émission d'ordres de recalcul concernant la portion de la pluralité de résultats d'interrogation de base de données précalculés dès que possible ;
- pour des évènements en temps réel qui sont représentés dans le modèle probabiliste, l'accumulation de tels évènements en temps réel sur une certaine période de temps, la comparaison des évènements en temps réel accumulés et survenus réellement avec leur représentation dans le modèle probabiliste et, si les évènements en temps réel accumulés survenus réellement s'écartent de leur représentation dans le modèle probabiliste à un degré prédéterminé, l'émission d'un ordre de recalcul par lots par rapport à la portion de la pluralité de résultats d'interrogation de base de données précalculés dès que possible.

15. Support de stockage lisible par ordinateur non transitoire dans lequel sont stockées des instructions de programme d'ordinateur, qui lorsqu'elles sont exécutées sur un système d'ordinateur, sont adaptées pour mettre en oeuvre les agencements de la plateforme de calcul (2), de la plateforme de recherche (3) et de la plateforme de déclenchement de recalcul (4) selon l'une quelconque des revendications 1 à 8.
